# NEUE EUROPÄISCHE PATENTSCHRIFT

(11) **EP 2 573 267 B2**
(45) Veröffentlichungstag und Bekanntmachung des Hinweises auf die Entscheidung über den Einspruch: **04.05.2022**
(45) Hinweis auf die Patenterteilung: 14.01.2015
(21) Anmeldenummer: 12006629.5
(22) Anmeldetag: 21.09.2012
(51) Int. Cl.: E01C 23/088

(54) **Arbeitszug mit einer Fräsvorrichtung und einer Transporteinrichtung sowie einer Sensoreinrichtung zur Abstandsüberwachung, Fräsvorrichtung mit einer Sensoreinrichtung und Verfahren zur Abstandsüberwachung bei einem Arbeitszug**
Maintenance train with a milling device and a transport device and a sensor device for distance monitoring, milling device having a sensor device and method for distance monitoring in a maintenance train
Train de traveaux avec un dispositif de fraisage et une installation de transport et un dispositif de capteur pour la surveillance à distance, dispositif de fraisage avec un dispositif de capteur et procédé de surveillance à distance avec un train de traveaux

(30) Priorität: 22.09.2011 DE 102011114185
(43) Veröffentlichungstag der Anmeldung: 27.03.2013
(73) Patentinhaber: BOMAG GmbH, 56154 Boppard (DE)
(72) Erfinder: Simon, Martin, 56332 Brodenbach (DE)
(74) Vertreter: Heidler, Philipp

(56) Entgegenhaltungen:
- EP-A1- 0 667 415
- EP-A1- 0 667 415
- EP-A1- 1 574 122
- EP-A1- 2 006 448
- EP-A2- 1 219 153
- EP-A2- 2 298 997
- WO-A1-2005/123440
- DE-A1- 19 654 626
- DE-A1-102005 035 480
- DE-A1-102008 015 277
- JP-A- H1 150 415
- US-A1- 2009 222 186

## Beschreibung

Die Erfindung betrifft einen Arbeitszug, umfassend eine Fräsvorrichtung und eine Transporteinrichtung, mit einer Einrichtung zur Überwachung des Abstandes zwischen der Transporteinrichtung und der Fräsvorrichtung, eine Fräsvorrichtung mit einer solchen Einrichtung und ein Verfahren zur Durchführung einer Abstandsüberwachung bei einem solchen Arbeitszug.

Gattungsgemäße Fräsvorrichtungen sind aus dem Stand der Technik bekannt und finden beispielsweise im Straßen- und Wegebau, insbesondere als Kaltfräse, Stabilisierer und/oder Recycler, oder zum Abbau von Bodenmaterial, beispielsweise im Tagebaubetrieb als Surface-Miner, Verwendung. Eine solche Fräsvorrichtung weist eine Arbeitswalze auf, deren Außenmantel mit einer Vielzahl von Fräswerkzeugen, insbesondere Meißeln, bestückt ist. Je nach Anwendung und Arbeitsbetrieb kann die Arbeitswalze in oder entgegen der Arbeitsrichtung der Fräsvorrichtung angetrieben werden. Während des Fräsbetriebes rotiert die Arbeitswalze um ihre Rotationsachse und die in den Boden eintauchenden Bearbeitungswerkzeuge tragen Bodenmaterial in einer vorgegebenen Frästiefe ab. Solche Fräsvorrichtungen sind entweder als Anhängeteil oder, bevorzugt, als selbstfahrende Maschinen ausgebildet. Um einen effektiven und kontinuierlichen Arbeitsprozess zu garantieren, wird üblicherweise das von der Arbeitswalze abgefräste Bodenmaterial mit Hilfe einer Fördereinrichtung während des Fräsbetriebs zu einer Abwurfstelle transportiert. Von der Abwurfstelle wird das Fräsgut in einen Transportbehälter einer Transporteinrichtung, beispielsweise einen Lastkraftwagen oder Muldenkipper, abgeladen. Dabei gibt es verschiedene Anordnungen der Fräsvorrichtung und der Transporteinrichtung beziehungsweise der Fördereinrichtung. Ist die Fräsvorrichtung als sogenannter Hinterlader ausgebildet, wird das Fräsgut von der Fräsvorrichtung nach hinten in die Transporteinrichtung abgeladen. Ist die Fördereinrichtung ein Seitenlader, wird das Fräsgut zur Seite befördert und bei einem Frontlader wird das abgefräste Material nach vorne beziehungsweise in Arbeitsrichtung der Fräsvorrichtung an die Transporteinrichtung übergeben. Sobald der Transportbehälter einer Transporteinrichtung bis zur maximalen Füllhöhe beladen ist, wird die Transporteinrichtung aus dem Arbeitszug entfernt und durch eine Transporteinrichtung mit leerem Transportbehälter ersetzt.

Während des Fräsbetriebes bewegt sich die Fräsvorrichtung in Arbeitsrichtung über den zu bearbeitenden Boden. Um ein zeitgleiches Fräsen und Abladen des Fräsgutes zu erreichen, müssen sich die Transporteinrichtung und die Fräsvorrichtung zu jeder Zeit so im Abstand zueinander in Arbeits- beziehungsweise Fahrtrichtung bewegen, dass das Fräsgut über die Fördereinrichtung in den entsprechenden Transportbehälter der Transporteinrichtung befördert werden kann. Da sich die Transporteinrichtung üblicherweise nicht so langsam wie die Fräsvorrichtung fortbewegen kann und damit die Abwurfstelle der Fördereinrichtung sich relativ zum Transportbehälter in Arbeitsrichtung verschiebt, besteht die Herausforderung darin, den Abstand zwischen Transporteinrichtung und Fräsvorrichtung kontinuierlich zu überwachen, entsprechend anzupassen und in einem Bereich zu halten, in dem das Fräsgut noch zuverlässig und möglichst vollständig in den Transportbehälter der Transporteinrichtung abgeladen werden kann, um beispielsweise neben dem Transportbehälter herabfallendes Fräsgut, welches ein nicht unbeträchtliches Unfallrisiko für in der Nähe befindliche Personen darstellt, zu vermeiden. Eine gängige Praxis ist das wiederholte Anfahren und Anhalten der Transporteinrichtung relativ zur nahezu kontinuierlich fahrenden Fräsvorrichtung. Eine weitere Herausforderung stellt dabei die gleichmäßige Beladung über die gesamte Fläche des Transportbehälters der Transporteinrichtung dar. Im Folgenden wird dieses Verfahren anhand einer Frontlader-Straßenfräse weiter erläutert.

Fährt die Transporteinrichtung vor der Fräsvorrichtung vorweg, ist es für den Fahrer der Transporteinrichtung schwierig, den Abladevorgang des Fräsguts, der hinter seinem Rücken stattfindet, zu beobachten. Daher stellen sich dem Fräsvorrichtungsführer folgende Aufgaben: Zunächst muss sichergestellt werden, dass die Fräsvorrichtung im gewünschten Bereich Boden abfräst und das abgefräste Material möglichst vollständig über die Fördereinrichtung in den Transportbehälter der Transporteinrichtung gelangt. Weiterhin soll der Transportbehälter gleichmäßig beladen werden. Außerdem gilt es, eine Kollision zwischen der Fräsvorrichtung und der vorausfahrenden oder hinterherfahrenden Transporteinrichtung zu vermeiden. Nach bisheriger Praxis ist es alleinige Aufgabe des Maschinenführers der Fräsvorrichtung, diese Aufgaben zu koordinieren. Zusätzlich muss er das Umfeld nach möglichen Gefahren, Hindernissen oder Kurven absuchen. Dies alles stellt insgesamt besonders hohe Anforderungen an die Aufmerksamkeit des Maschinenführers der Fräsvorrichtung und kann schnell zu Fehlern im Fräs- und Beladebetrieb führen.

Die Koordination des Abstandes zwischen Fräsvorrichtung und Transporteinrichtung erfolgt derzeit üblicherweise konkret über Hupzeichen, die vom Maschinenführer der Fräsvorrichtung manuell und nach eigenem Ermessen ausgelöst werden. Ist die Transporteinrichtung zu weit in Arbeitsrichtung nach vorne vorgefahren, gelangt das Fräsgut nicht mehr in den Transportbehälter, sondern fällt zwischen Transporteinrichtung und Fräsvorrichtung auf den Boden. Um den Fahrer der Transporteinrichtung zum Anhalten zu veranlassen und somit den Transportbehälter wieder in Reichweite der Fördereinrichtung zu bringen, betätigt der Fräsvorrichtungsführer die Hupe. Wenn sich die sich mit nahezu konstanter Geschwindigkeit fortbewegende Fräsvorrichtung der stehenden Transporteinrichtung bis auf einen Minimalabstand genähert hat, zeigt der Fräsvorrichtungsführer dem Fahrer der Transporteinrichtung über ein erneutes Hupsignal an, wieder anzufahren, um eine Kollision der beiden Fahrzeuge zu vermeiden. Der Minimalabstand ist der Abstand, bei dem die Fördereinrichtung das Fräsgut gerade noch in den vorderen Bereich des Transportbehälters abtransportieren kann und bei dem die Fräsvorrichtung gerade nicht mit der Transporteinrichtung kollidiert. Daraufhin fährt der Transporteinrichtungsführer solange vorwärts, bis der Maximalabstand zwischen den beiden Fahrzeugen erreicht ist. Der Maximalabstand für den Beladevorgang ist derjenige Abstand zwischen beiden Fahrzeugen des Arbeitszuges, in dem das Fräsgut gerade noch in den Transportbehälter abgeladen wird und noch nicht hinter dem Transportbehälter auf den Boden fällt. Bei Erreichen des Maximalabstandes wird der Transporteinrichtungsführer wieder mittels eines Hupsignals durch den Maschinenführer der Fräsvorrichtung darauf hingewiesen, die Transporteinrichtung zu stoppen. Relativ zueinander pendeln die Fräsvorrichtung und die Transporteinrichtung somit während des Beladungsvorgangs zwischen dem Maximal- und dem Minimalabstand zueinander und bewegen sich dabei in ihrer Gesamtheit in Arbeitsrichtung fort. Ist der Transportbehälter voll, gibt der Maschinenführer der Fräsvorrichtung nochmals ein entsprechendes Hupsignal zum Abfahren.

In Anbetracht der Vielzahl der Aufgaben, die dem Maschinenführer der Fräsvorrichtung zukommen, stellt diese Tätigkeit besonders hohe Anforderungen an seine Konzentration und Aufmerksamkeit. Des Weiteren können die Hupsignale andere Verkehrsteilnehmer irritieren, weil diese das Hupen der Fräsvorrichtung fälschlicherweise als Warnung vor einer Gefahr interpretieren. Gleichzeitig kann aber auch der Fahrer der Transporteinrichtung durch das Hupen anderer Verkehrsteilnehmer abgelenkt und verunsichert werden. Darüber hinaus können sich Anwohner in der Nähe von Baustellen, vor allem bei Nachtbaustellen, durch das wiederholte Hupen gestört fühlen.

Aufgabe der Erfindung ist es daher, eine Vorrichtung und ein Verfahren anzugeben, welche den Führer der Fräsvorrichtung während des Fräsbetriebes entlastet. Idealerweise soll gleichzeitig eine Störung anderer Verkehrsteilnehmer beziehungsweise Anwohner möglichst minimiert werden und zudem eine Kollision zwischen der Fräsvorrichtung und der Transporteinrichtung während des Beladevorgangs ausgeschlossen werden.

Die Lösung der Aufgabe gelingt mit einer Vorrichtung zur Abstandsüberwachung bei einem Arbeitszug, mit einer Fräsvorrichtung und mit einem Verfahren zur Abstandsüberwachung gemäß einem der unabhängigen Ansprüche. Bevorzugte Weiterbildungen sind in den abhängigen Ansprüchen angegeben.

Ein zentraler Aspekt der Erfindung liegt darin, dass der Maschinenführer der Fräsvorrichtung durch eine automatische Abstandsüberwachung entlastet wird, die den, insbesondere horizontalen und ganz besonders in Arbeitsrichtung vorliegenden, Abstand zwischen der Transporteinrichtung und der Fräsvorrichtung überwacht. Die Abstandsüberwachung kann dabei in der Weise ausgebildet sein, dass sie den ermittelten Abstand an sich anzeigt und der Maschinenführer der Fräsvorrichtung anschließend in Abhängigkeit vom angezeigten Abstandswert Kommandos an den Fahrer der Transporteinrichtung weiterleitet. Bevorzugt koordiniert die Abstandsüberwachung allerdings auch die Ausgabe entsprechender Steuerkommandos, wie nachstehend noch näher beschrieben werden wird. Damit kann sich der Maschinenführer der Fräsvorrichtung während des Fräsbetriebes besonders auf die Durchführung der Fräsarbeiten konzentrieren und wird nicht durch die parallele Überwachung des Abstandes zwischen der Fräsvorrichtung und der Transporteinrichtung abgelenkt. Der Maschinenführer der Fräsvorrichtung muss also nicht mehr kontinuierlich den Abstand abschätzen und dem Transporteinrichtungsführer Kommandos zum Steuern des Abladeprozesses übermitteln. Kollisionen zwischen der Fräsvorrichtung und der Transporteinrichtung treten somit, auch bei mangelnder Aufmerksamkeit des Maschinenführers der Fräsvorrichtung, nicht mehr auf. Je nach Ausführung der Erfindung ist zudem gleichzeitig auch eine Entlastung des Transporteinrichtungsführers möglich, indem dieser nicht mehr fortwährend darauf vorbereitet sein muss, das Hupen der Fräsvorrichtung zu hören beziehungsweise dieses von anderen Geräuschen und Hupsignalen zu unterscheiden und entsprechend zu reagieren. Diese Vorteile der Erfindung treten ganz besonders deutlich dann hervor, wenn der Beladevorgang während des Fräsprozesses bei beengten Platzverhältnissen erfolgt, wie es insbesondere beispielsweise häufig im Straßenbau der Fall ist, wodurch insgesamt eine erhöhte Personen- und Verkehrssicherheit im Arbeitsbereich der Fräsvorrichtung erreicht wird. Insgesamt besticht die Erfindung zudem durch ihren einfachen und dabei besonders effizienten Aufbau, wonach über eine reine, insbesondere in Horizontalrichtung erfolgende, Abstandsüberwachung eine zuverlässige und kollisionfreie Überladung des Fräsguts auf ein Transportfahrzeug ermöglicht wird.

Die Umsetzung der Erfindung erfolgt konkret mit Hilfe einer Sensoreinrichtung, einer Steuereinheit und einer Anzeigeeinrichtung. Die Sensoreinrichtung ist zur Bestimmung und Überwachung des, insbesondere horizontalen Abstandes zwischen Fräsvorrichtung und Transporteinrichtung, optimalerweise in oder entgegen der Arbeitsrichtung der Fräsvorrichtung im Arbeitsbetrieb, ausgebildet. Die Sensoreinrichtung ist allgemein dazu ausgebildet, von ihr ausgehend in eine bestimmte Richtung den Abstand zum andern Fahrzeug des Arbeitszuges (oder zu einem Hindernis) zu erfassen, insbesondere ausgehend von der Fräsvorrichtung den Abstand zur Transporteinrichtung, insbesondere in oder entgegen der Arbeitsrichtung. Optimalerweise wird dabei der Abstand in der Horizontalebene in oder entgegen der Arbeitsrichtung der Fräsvorrichtung zur Transporteinrichtung ermittelt. Geeignete Sensoren zur Abstandsmessung sind dem Fachmann geläufig. Die Abstandsmessung erfolgt beispielsweise insbesondere aufgrund einer bestimmten Messgröße, beispielsweise mittels Laufzeitmessung elektromagnetischer oder akustischer Wellen oder mit Hilfe elektrooptischer Verfahren.

Die von der Sensoreinrichtung ermittelten Messwerte oder Abstandswerte zwischen Fräsvorrichtung und Transporteinrichtung werden an eine Steuereinheit übermittelt. Die Steuereinheit ist in der Weise ausgebildet, dass sie in Abhängigkeit des laufend ermittelten Abstands eine oder mehrere Ausgabeeinrichtungen steuert. Die Ausgabeeinrichtung ist dabei dasjenige Element, über das die von der Sensoreinrichtung ermittelte und über die Steuereinheit bestimmte Abstandsinformation, sei es als konkreter Abstandswert oder, bevorzugt, als abstandsabhängiges Steuerkommando, von außen wahrnehmbar angegeben wird. Die Ausgabeeinrichtung kann dabei insbesondere dasjenige Element sein, über das der Führer der Transporteinrichtung seine Befehle zum Anfahren, Anhalten und Abfahren unabhängig von einer aktiven Betätigung des Maschinenführers der Fräsvorrichtung erhält. Die Ausgabeeinrichtung zeichnet sich in dieser Ausführungsform dadurch aus, dass sie zur Ausgabe von Steuerbefehlen in einer Weise ausgebildet ist, dass sie der Fahrer der Transporteinrichtung registrieren und umsetzen kann. Insgesamt übernimmt somit die Gesamtheit aus Sensoreinrichtung, Steuereinheit und Ausgabeeinrichtung die Koordination des Abstandes der Fräsvorrichtung und der Transporteinrichtung und entlastet den Maschinenführer der Fräsvorrichtung von dieser Aufgabe.

Es versteht sich von selbst, dass bei der konkreten Umsetzung der Erfindung auf ein breites Spektrum alternativer Möglichkeiten, insbesondere im Hinblick auf die Ausbildung der Sensoreinrichtung, der Steuereinheit und der Anzeigevorrichtung, zurückgegriffen werden kann. Nachstehend werden beispielhaft bevorzugte Weiterbildungen der Erfindung näher angegeben.

Mit dem Begriff Sensoreinrichtung wird vorliegend diejenige Einrichtung bezeichnet, die zur konkreten Abstandsermittlung zwischen der Fräsvorrichtung und der Transporteinrichtung herangezogen wird. Dazu ist es zwar möglich, dass Teile der Sensoreinrichtung sowohl an der Transporteinrichtung als auch an der Fräsvorrichtung angeordnet werden. Dies kann beispielsweise dann der Fall sein, wenn gesonderte Hilfsmittel zur Abstandsermittlung, beispielsweise an der Transporteinrichtung und/oder an der Fräsvorrichtung angeordnete Transponderelemente, Reflektoren, Markierungselemente, etc., verwendet werden. Bevorzugt ist die Sensoreinrichtung allerdings vollständig an der Fräsvorrichtung angeordnet und in der Weise ausgebildet, dass sie keine besonderen Zusatzeinrichtungen auf Seiten der Transporteinrichtung zur Abstandsermittlung benötigt. Ausgehend von der Position der Fräsvorrichtung ermittelt dann die Sensoreinrichtung den, insbesondere in der Horizontalebene vorliegenden, Abstand, speziell in oder, abhängig von der Position der Transporteinrichtung, entgegen der Arbeitsrichtung des Fräsvorrichtung, zur Transporteinrichtung. Dies hat den Vorteil, dass die Transporteinrichtung keine speziellen Einrichtungen zur Abstandsermittlung aufweisen muss und nicht alle während des Fräsbetriebs zum Einsatz kommenden Transporteinrichtungen mit entsprechenden Elementen der Sensoreinrichtung ausgestattet sein müssen. Idealerweise ist die Sensoreinrichtung in einem der Transporteinrichtung zugewandten Bereich an der Fräsvorrichtung angebracht und nutzt beispielsweise Teilbereiche der Transportfläche als Reflektionsfläche zur Laufzeitermittlung und damit zur Distanzbestimmung. Die Sensoreinrichtung ist demnach an der Fräsvorrichtung, das heißt beispielsweise am Maschinenrahmen, oder an einem Element befestigt sein, das zusammen mit der Fräsvorrichtung im Fräsbetrieb bewegt wird. Wichtig ist dabei, dass die Sensoreinrichtung mit ihrer Messrichtung in Richtung der Transporteinrichtung orientiert ist, um den Abstand zur Transporteinrichtung möglichst direkt und ohne Umlenkungen erfassen zu können.

Grundsätzlich können zur Abstandsbestimmung mithilfe der Sensoreinrichtung verschiedene Messmethoden verwendet werden. Die Sensoreinrichtung umfasst dazu wenigstens einen Sensor zur, insbesondere in der Horizontalebene vorliegenden, Abstandsermittlung, kann aber auch mehrere und auch mit unterschiedlichen Messprinzipien arbeitende Sensoren umfassen. Optimalerweise bestimmen alle vorhandenen Sensoren den Abstand zwischen Fräsvorrichtung und Transporteinrichtung in die gleiche Richtung, insbesondere in oder entgegen der Arbeitsrichtung, speziell in der Horizontalebene. Als besonders geeignet haben sich dabei auf Laufzeitmessung oder Phasenverschiebung beruhende Messmethoden erwiesen. In diesem Fall wird ein von der Sensoreinrichtung aktiv ausgesendetes Signal an einem Objekt, vorliegend bevorzugt von der Transporteinrichtung, reflektiert, von der Sensoreinrichtung wieder empfangen und direkt in einen Abstandswert umgerechnet und anschließend an die Steuereinheit übersendet oder erst von der Steuereinheit in einen konkreten Abstandswert umgerechnet. Die Sensoreinrichtung kann dazu beispielsweise Licht-, insbesondere Laser-, Infrarot-, Funk-, Ultraschall-, oder Radarwellen zur Abstandsmessung aussenden. Besonders bevorzugt weist die Sensoreinrichtung somit mindestens ein Ultraschall-, Radar- oder Lasersensorelement auf. Ein Sensorelement ist somit allgemein eine Messelement, welches konkret zur Abstandsmessung, beispielsweise zur Aussendung eines Messsignals und zum Empfangen eines Reflektionssignals, ausgebildet ist. Wenigstens ein Sensorelement und insbesondere mehrere Sensorelemente bilden, bevorzugt in einem Sensorgehäuse zusammengefasst, zusammen somit die Sensoreinrichtung.

Um die Genauigkeit der Abstandsmessung zu erhöhen, ist es vorgesehen, wenigstens zwei Sensorelemente zur Bestimmung des Abstandes zwischen Fräsvorrichtung und Transporteinrichtung heranzuziehen. Erfindungsgemäß sind die Sensorelemente auf gleicher Höhe nebeneinander am Maschinenrahmen der Fräsvorrichtung angeordnet, sodass die Kontur der Transporteinrichtung, die sich in der Länge von oben nach unten verändert, nicht den wirklichen Abstandswert verfälscht. Die wenigstens zwei Sensorelemente sind ferner bevorzugt möglichst weit in der Breite zueinander beabstandet, um besonders exakte Abstandswerte zu erhalten.

Der Bereich zwischen der Fräsvorrichtung und der Transporteinrichtung ist im Fräsbetrieb besonders kritisch und darf üblicherweise von keiner Person betreten werden, da dort schnell Personenschäden auftreten können. In einer bevorzugten Ausführungsform der Erfindung ist es daher vorgesehen, dass die erfindungsgemäße Sensoreinrichtung nicht nur zur reinen Abstandüberwachung zwischen der Fräsvorrichtung und der Transporteinrichtung, sondern gleichzeitig zur Bereichsüberwachung dieses Zwischenraums genutzt wird. Bereichüberwachung bedeutet dabei insbesondere, dass die An- und Abwesenheit von Personen in diesem Bereich überwacht wird. Die Steuereinheit kann bei dieser Ausführungsform beispielsweise in der Weise ausgebildet sein, dass sie bei sprunghaften Distanzänderungen, wie es beispielsweise bei einer in den Überwachungsbereich eintretenden Person der Fall ist, speziell diese Gefahrensituation über die Ausgabeeinrichtung signalisiert. Gleichzeitig oder alternativ kann die Steuereinheit auch in der Weise ausgebildet sein, dass sie zur Erkennung der Transporteinrichtung ausgebildet ist. Dies ermöglicht es einerseits, dass die Steuereinheit zwischen der Transporteinrichtung und anderen Objekten unterscheiden kann. Andererseits kann die Steuereinheit unterschiedliche Eigenschaften der jeweiligen Transporteinrichtungen zur Abstandsüberwachung und Ausgabe der Steuerkommandos berücksichtigen, wie beispielsweise unterschiedliche Abmessungen des jeweiligen Transportbehälters, etc. Besonders bevorzugt umfasst diese Ausführungsform wenigstens ein Sensorelement, das zum Aufbau eines Funkfeldes zur Bereichsüberwachung ausgebildet ist. Dieser Funksensor hat unter anderem den Vorteil, dass er beispielsweise gegenüber einer Funktionsbeeinträchtigung durch Verschmutzung wesentlich unempfindlicher ist.

Ein weiteres zentrales Element der Erfindung ist die Ausgabeeinrichtung, die entweder zur Ausgabe des konkret ermittelten Abstandswertes oder, bevorzugt, zur Ausgabe wenigstens der Steuersignale "anhalten", "vorwärts fahren" und "abfahren" ausgebildet ist. Die nachstehenden Ausführungen beziehen sich dabei im Wesentlichen auf die bevorzugte Ausführungsform. Grundsätzlich ist es beispielsweise möglich, dass die Ausgabeeinrichtung diese Steuersignale, wie bisher üblich, über eine Hupe ausgibt, mit dem Unterschied, dass die Betätigung der Hupe selbsttätig von der Steuereinheit und nicht manuell vom Führer der Fräsvorrichtung erfolgt. Bevorzugt ist es jedoch, wenn die Ausgabeeinrichtung die Steuersignale optisch beziehungsweise visuell wahrnehmbar ausgibt. Dazu kann die Ausgabeeinrichtung beispielsweise ein geeignetes Anzeigeelement, vergleichbar mit einer Ampel, aufweisen. Diese kann an der Fräsvorrichtung in der Weise angeordnet sein, dass der Fahrer der Transporteinrichtung die Ausgabeeinrichtung über den Rückspiegel des Transportfahrzeuges beobachten kann. Dies erfordert allerdings die permanente Aufmerksamkeit des Fahrers des Transportfahrzeugs. Abhilfe kann in diesem Zusammenhang über eine Ausgabeeinrichtung erhalten werden, die am oder im Transportfahrzeug angeordnet ist. Die Beobachtung der Ausgabeeinrichtung ist dann wesentlich komfortabler für den Fahrer des Transportfahrzeugs.

Dabei kann es erfindungsgemäß vorgesehen sein, dass die Steuereinheit eine Ausgabeeinrichtung zur Ausgabe der Steuerkommandos an den Fahrer des Transportfahrzeuges ansteuert, die bereits im Transportfahrzeug vorhanden ist, wie beispielsweise ein Navigationsgerät, eine Audioanlage, ein sonstiges Display, etc. Dies setzt allerdings eine Kompatibilität dieser Ausgabeeinrichtung mit der Steuereinheit voraus, die nicht zwingend immer gegeben ist. Die Ausgabeeinrichtung kann ferner fest im oder am Transportfahrzeug integriert sein. So ist es beispielsweise möglich, dass ein geeignetes Anzeigeelement in einen oder mehrere der Spiegel des Transportfahrzeuges integriert ist. Dies setzt wiederum eine entsprechende Ausstattung der gesamten Flotte an Transportfahrzeugen mit entsprechenden Ausgabeeinrichtungen voraus. Besonders bevorzugt ist die Ausgabeeinrichtung daher als Mobilteil ausgebildet, das während des Beladevorgangs am oder im Transportfahrzeug angebracht werden kann. Das Mobilteil zeichnet sich dadurch aus, dass es portabel ist und ohne Installationsaufwand zwischen mehreren Transportfahrzeugen gewechselt werden kann. Damit können schon vorhandene Transporteinrichtungen kostengünstig mit einer Ausgabeeinrichtung versehen werden, die den Maschinenführer bei der Koordination des Materialabtransports während des Fräsbetriebs unterstützen.

Auch die Art und Weise, wie die Ausgabeeinrichtung die Steuerbefehle an den Fahrer des Transportfahrzeuges ausgibt, kann variieren. Dies kann beispielsweise mit akustischen Signalen erfolgen und/oder optisch. Grundsätzlich ist ergänzend oder alternativ auch eine haptisch wahrnehmbare Signalisierung, beispielsweise mittels einer Vibrationseinrichtung, möglich. Im praktischen Einsatz hat sich allerdings insbesondere eine optische Anzeige der Steuerbefehle als besonders geeignet erwiesen. Idealerweise ist die Ausgabeeinrichtung daher mit einem optischen Anzeigemittel ausgestattet. Dieses optische Anzeigemittel kann beispielsweise ein Bildschirm, eine Anzeigeleiste oder auch eine Ampel sein. Die optischen Anzeigemittel dienen jedenfalls zur visuellen Darstellung der Steuerbefehle, die dem Fahrer der Transporteinrichtung anzeigen, wie der Abstand zur Fräsvorrichtung zu regulieren ist.

In einer bevorzugten Ausführungsform der Erfindung ist die Ausgabeeinrichtung zur drahtlosen Kommunikation mit der Steuereinheit ausgebildet. Dies bietet den Vorteil, dass die Steuereinheit sich nicht in unmittelbarer Nähe zur Ausgabeeinrichtung befinden muss oder einer Kabelverbindung zwischen den beiden Einheiten vorhanden sein muss.

Durch die Anordnung der Ausgabeeinrichtung an oder in der Transporteinrichtung wird dem Transporteinrichtungsführer die Koordination des Abstandes zwischen Transporteinrichtung und Fräsvorrichtung während des Fräsbetriebs erleichtert beziehungsweise abgenommen und dadurch eine Kollision zwischen der in der Regel kontinuierlich in Arbeitsrichtung fahrenden und der häufig in Arbeitsrichtung vor oder hinter der Fräsvorrichtung intervallartig anfahrenden und abstoppenden Transporteinrichtung sicher vermieden. Um dem Maschinenführer der Fräsvorrichtung eine Möglichkeit zur Kontrolle der Signale und den daraus resultierenden Handlungen des Transporteinrichtungsführers zu geben, ist es vorteilhaft, zusätzlich zur Ausgabeeinrichtung, die zur Ausgabe der Steuerbefehle an den Fahrer des Transportfahrzeugs ausgebildet ist, eine Kontrollausgabeeinrichtung vorzusehen. Diese wird ebenfalls von der Steuereinheit gesteuert. Die Kontrollausgabeeinrichtung ist in der Weise ausgebildet, dass der Fahrer der Fräsvorrichtung erkennen und prüfen kann, welche Steuerkommandos dem Fahrer des Transportfahrzeuges gerade angegeben werden. Die Kontrollausgabeeinrichtung ist somit in der Weise ausgebildet und angeordnet, dass der Maschinenführer der Fräsvorrichtung die Steuerbefehle wahrnehmen und kontrollieren kann. Die Kontrollausgabeeinrichtung ist vorzugsweise am oder in der Nähe des Bedienarbeitsplatzes der Fräsvorrichtung angebracht. Der Bedienarbeitsplatz bezeichnet dabei denjenigen Bereich, in dem der Maschinenführer der Fräsvorrichtung die Fräsvorrichtung im Fräsbetrieb bedient. Die Kontrollausgabeeinrichtung kann die Steuerbefehle ebenfalls optisch, haptisch und/oder akustisch ausgeben, wobei sich auch hier insbesondere eine optische Anzeige bewährt hat. Die Steuereinheit ist dabei in der Weise ausgebildet, dass sie gleichzeitig die Ausgabeeinrichtung und die Kontrollausgabeeinrichtung ansteuert und die Ausgabe der Steuerkommandos auslöst. Die Kontrollausgabeeinrichtung kann im einfachsten Fall dieselbe bauliche Konstruktion, insbesondere eine Ausbildung als Mobilteil, aufweisen oder gar einteilig mit der Ausgabeeinrichtung ausgebildet sein. Auf diese Weise kann die Gesamtzahl verschiedener Komponenten gering gehalten werden.

Bevorzugt sind die Steuereinheit und die Sensoreinrichtung als ein gemeinsames Bauteil ausgebildet beziehungsweise in einem gemeinsamen Gehäuse angeordnet, wodurch die Montage der Sensoreinrichtung und der Steuereinheit am Arbeitszug erheblich erleichtert wird. Die Steuereinheit und die Sensoreinrichtung können alternativ aber auch getrennt voneinander als einzelne Elemente in oder an der Transporteinrichtung und Fräsvorrichtung angebracht sein. Die Übertragung der Daten und Steuerbefehle zwischen der Sensoreinrichtung und der Steuereinheit einerseits und der Steuereinheit und der Ausgabeeinrichtung andererseits erfolgt über eine geeignete Verbindung, die eine Kommunikation zwischen den jeweiligen Elementen und insbesondere den Empfang und/oder das Absenden von Daten und/oder Steuerbefehlen ermöglicht. Eine derartige Verbindung kann insbesondere eine Leitung zur Weiterleitung elektrischer oder optischer Signale und ganz besonders auch eine kabellose Verbindungen, beispielsweise Funkverbindung, sein.

Die Fräsvorrichtung des Arbeitszuges kann unterschiedlich ausgebildet sein, insbesondere im Hinblick auf die Anordnung und Abtransportrichtung eines an der Fräsvorrichtung angeordneten Förderbandes. So sind Fräsvorrichtungen bekannt, die ein Förderband aufweisen, das das Fräsgut in Bezug auf die Arbeitsrichtung nach hinten, in Ausnahmefällen zur Seite der Fräsvorrichtung, ablädt. Besonders bewährt hat sich die Erfindung allerdings neben einer entgegen der Arbeitsrichtung gerichteten Verladung beim Einsatz mit einer sogenannten Frontlader-Fräsvorrichtung, bei der die Transporteinrichtung für das Fräsgut in Arbeitsrichtung der Fräsvorrichtung beziehungsweise im Vorderbereich angeordnet ist und das abgefräste Bodenmaterial somit von der Fräsvorrichtung nach vorne in Arbeitsrichtung der Fräsvorrichtung in den Transportbehälter abgeladen wird. Das Transportfahrzeug fährt bei dieser Ausführungsform somit vor der nachfahrenden Fräsvorrichtung vorweg und bewegt sich auf noch nicht abgefrästem Untergrund. Bei dieser Ausführungsform kommt insbesondere auch der Vorteil der Kollisionsvermeidung zwischen den beiden Fahrzeugen im Arbeits- und Verladebetrieb besonders zum Tragen.

Insgesamt wird durch die Kombination von Sensoreinrichtung, Steuereinheit und Ausgabeeinrichtung somit eine automatisierte Abstandsüberwachung, insbesondere in der Horizontalebene, speziell in oder entgegen der Arbeitsrichtung, und -regulation über die selbsttätige Ausgabe entsprechender Steuerkommandos ermöglicht, ohne dass ein individuelles Eingreifen und konstantes Überprüfen des Abstandes durch den Maschinenführers der Fräsvorrichtung benötigt wird. Damit muss der Maschinenführer der Fräsvorrichtung nicht mehr kontinuierlich die Position der Transporteinrichtung in Abhängigkeit von der Fräsvorrichtung beobachten und wird diesbezüglich somit erheblich entlastet. Der Fahrer des Transportfahrzeuges muss im Gegenzug nur noch gezielt auf die von der Ausgabeeinrichtung angegebenen Steuerkommandos achten die, je nach Ausführungsform, synchron über die Kontrollausgabeeinrichtung dem Fahrer der Fräsvorrichtung angegeben werden.

Wie vorstehend bereits erwähnt, sind die Sensoreinrichtung, die Steuereinheit und die Ausgabeeinrichtung bevorzugt an der Fräsvorrichtung angeordnet, um beispielsweise ein umfangreiches Ausrüsten einer Flotte an Transporteinrichtungen zu vermeiden. Ein weiterer Aspekt der Erfindung liegt somit auch in einer Fräsvorrichtung mit einer Sensoreinrichtung zur Abstandsermittlung der Fräsvorrichtung zur Transporteinrichtung, mit einer Steuereinheit und mit einer Ausgabeeinrichtung. Diese drei Elemente sind dabei ganz besonders gemäß den vorstehenden Ausführungen zum erfindungsgemäßen Arbeitszug ausgebildet. Die Fräsmaschine beziehungsweise Fräsvorrichtung kann dabei insbesondere eine Kaltfräse, ganz besonders eine Straßenkaltfräse oder ein Surface-Miner, sein.

Ein weiterer Aspekt der Erfindung liegt ferner in einem System zur Integration in einen Arbeitszug zum Abfräsen von Bodenmaterial, beispielsweise einen Arbeitszug gemäß den vorstehenden Ausführungen, insbesondere zum Abfräsen von Fahrbahnen und zum Abtransport des Fräsgutes. Das System umfasst eine Sensoreinrichtung, eine Steuereinheit und eine Ausgabeeinrichtung, wie sie in den vorhergehenden Absätzen bereits beschrieben wurden. Das System kann insbesondere auch als Nachrüstsatz ausgebildet sein mit den Komponenten "Sensoreinrichtung", "Steuereinheit" und "Ausgabeeinrichtung", wobei insbesondere die Sensoreinrichtung und die Steuereinheit oder die Steuereinheit und die Ausgabeeinrichtung und ganz besonders die Steuereinheit, die Sensoreinrichtung und die Ausgabeeinrichtung als ein zusammenhängendes Bauteil ausgebildet sein können. Die Komponenten des Systems können beispielsweise zum festen Einbau aber insbesondere auch als mobile Elemente, die zum schnellen Ein- und Ausbau ausgebildet sind, ausgelegt sein.

Die Erfindung betrifft schließlich auch ein Verfahren zum Bestimmen und Überwachen des Abstandes, insbesondere in oder entgegen der Arbeitsrichtung und speziell des Abstandes in der Horizontalebene, zwischen einer Fräsvorrichtung mit einer Arbeitswalze und einer Transporteinrichtung mit einem Transportbehälter, in den abgefrästes Bodenmaterial von der Fräsvorrichtung mittels einer Fördereinrichtung transportierbar ist. In Bezug auf die konkrete Ausbildung und Funktionsweise der Transporteinrichtung und der Fräsvorrichtung wird Bezug auf die vorhergehenden Ausführungen genommen. Das erfindungsgemäße Verfahren zeichnet sich im Wesentlichen dadurch aus, dass in Abhängigkeit vom, insbesondere horizontalen, Abstand der Fräsvorrichtung zum Transportfahrzeug eine Ausgabeeinrichtung zur Ausgabe von Steuerkommandos von einer Steuereinheit gesteuert wird. Bei dem erfindungsgemäßen Verfahren wird konkret zunächst der Abstand zwischen Fräsvorrichtung und Transporteinrichtung mit Hilfe einer Sensoreinrichtung ermittelt und während des Fräs- und Beladebetriebes überwacht. Der von der Sensoreinrichtung jeweils ermittelte Abstand wird danach an die Steuereinheit übermittelt. In Abhängigkeit der ermittelten Abstände wird schließlich eine Ausgabeeinrichtung durch die Steuereinheit gesteuert, konkret wird die Ausgabe wenigstens der Steuerkommandos "anhalten", "weiterfahren" und "abfahren" von der Steuereinheit in Abhängigkeit vom jeweils von der Sensoreinrichtung ermittelten Abstandswert gesteuert. Die Steuereinheit, die Sensoreinrichtung und die Ausgabeeinrichtung sind dabei insbesondere gemäß den vorstehenden Ausführungen zum Arbeitszug, zur Fräsvorrichtung und zum System zur Integration in einen Arbeitszug gemäß der Erfindung ausgebildet.

Der wesentliche Aspekt des Verfahrens ist somit das Vorhandensein einer Sensoreinrichtung, die zur Ermittlung und kontinuierlichen Überwachung der, insbesondere horizontalen, Distanz zwischen der Fräsvorrichtung und der Transportvorrichtung während des Fräsbetriebs ausgebildet ist. Durch die automatisierte Abstandsüberwachung, insbesondere in oder entgegen der Arbeitsrichtung der Fräsvorrichtung, wird dem Maschinenführer der Fräsvorrichtung die Arbeit wesentlich erleichtert, weil er nicht mehr fortwährend die Position der Transporteinrichtung relativ zu der von ihm gesteuerten Fräsvorrichtung beobachten und dem Transporteinrichtungsführer entsprechende Steuerbefehle geben muss.

In einem ersten Schritt erfolgt beim erfindungsgemäßen Verfahren dabei das Ermitteln des Abstandes zwischen der Fräsvorrichtung und dem Transportfahrzeug durch die Sensoreinrichtung, insbesondere ausgehend von der Fräsvorrichtung, vorzugsweise in oder entgegen der Arbeitsrichtung der Fräsvorrichtung und besonders in der Horizontalebene. Dieses Ermitteln wird dabei über die gesamte Beladedauer fortgesetzt, so dass im Ergebnis der Abstand zwischen der Fräsvorrichtung und dem Transportfahrzeug überwacht wird. Die von der Sensoreinrichtung jeweils ermittelten Abstandswerte werden an die Steuereinheit übermittelt. Durch die Steuereinheit erfolgt ein Verarbeiten der ermittelten Abstandswerte. Konkret bedeutet das Verarbeiten der Abstandswerte beispielsweise, dass die Steuereinheit die Abstandswerte anhand vorgegebener Bedingungen, beispielsweise festgelegter Schwellenwerte wie Minimal- oder Maximalabstände, auswertet und in Abhängigkeit von der Auswertung eine Ausgabeeinrichtung steuert. Die Aufgabe der Steuereinheit ist es also, die von der Sensoreinrichtung empfangenen Messwerte beziehungsweise Signale zu empfangen, auszuwerten und anschließend in Abhängigkeit vom aktuellen Abstandswert die Ausgabeeinrichtung zu steuern. Die Ausgabeeinrichtung erfüllt den Zweck, dem Fahrer des Transportfahrzeugs durch optische, akustische und/oder haptische Signale Steuerkommandos zur Abstandsregulation zwischen dem Transportfahrzeug und der Fräsvorrichtung anzugeben und den Maschinenführer der Fräsvorrichtung entsprechend zu entlasten. Die Ausgabeeinrichtung muss demnach für den Fahrer der Transporteinrichtung zumindest in der Weise angeordnet sein, dass er die jeweiligen Steuerkommandos wahrnehmen kann, konkret beispielsweise im Blickfeld oder in Hörreichweite. Um den Maschinenführer zu entlasten, vermittelt die Steuereinheit also über die Ausgabeeinrichtung die von der Sensoreinrichtung ermittelten Abstände beziehungsweise aus der Auswertung der Abstände resultierende Signale. Die von der Ausgabeeinrichtung ausgesendeten Signale beziehungsweise Ergebnisse geben dem Transporteinrichtungsführer vor, zu welchem Zeitpunkt er anfahren oder stoppen beziehungsweise wohin er das Fahrzeug steuern soll.

Das erfindungsgemäße Verfahren sieht vor, dass der Abstand zwischen der Fräsvorrichtung und der Transporteinrichtung während des Beladevorgangs stets innerhalb eines bestimmten, insbesondere horizontalen und speziell in oder entgegen der Arbeitsrichtung der Fräsvorrichtung, Abstandsbereiches liegt, auch wenn sich beide Fahrzeuge im Fräs- und Beladebetrieb mit unterschiedlicher Geschwindigkeit fortbewegen. Allgemein ist die Steuereinheit dabei in der Weise ausgebildet, dass sie bei Erreichen eines Minimalabstandes zwischen beiden Fahrzeugen ein Steuerkommando zur Abstandsvergrößerung und bei Erreichen eines Maximalabstandes ein Steuerkommando zur Abstandsverkleinerung ausgibt. Für den Fall, dass es sich um eine in Arbeitsrichtung beziehungsweise nach vorn verladende Fräsvorrichtung (Frontlader-Fräsvorrichtung) handelt, gibt die Ausgabeeinrichtung bei Erreichen eines minimalen Abstandes zwischen der Fräsvorrichtung und der vorausfahrenden Transporteinrichtung ein "Vorwärts"-Signal aus, so dass der Fahrer der Transporteinrichtung anfährt und so der Abstand zwischen beiden Fahrzeugen vergrößert wird. Bei Erreichen eines maximalen Abstandes zwischen der Fräsvorrichtung und der vorausfahrenden Transporteinrichtung veranlasst die Steuereinheit die Ausgabe eines "Stopp"-Signal. Die Transporteinrichtung bleibt damit stehen und die arbeitende Fräsvorrichtung nähert sich dem Transportfahrzeug bei fortgesetztem Fräsbetrieb an. Der Minimalabstand ist beim vorliegenden Ausführungsbeispiel entsprechend so definiert, dass das Fräsgut gerade noch in den vorderen Bereich des Transportbehälters abgeladen werden kann und nicht in Arbeitsrichtung nach vorne über diesen hinausfällt beziehungsweise noch keine Kollision zwischen beiden Fahrzeugen auftritt, je nachdem, welcher Abstand größer ist. Der Maximalabstand liegt dann vor, wenn das Fräsgut gerade noch in den hinteren Bereich des Transportbehälters abgeworfen werden kann und nicht hinter der Transporteinrichtung auf den Boden fällt.

Ein wesentlicher Grundgedanke des erfindungsgemäßem Verfahren liegt somit darin, dass der Fahrer des Transportfahrzeuges seine Fahrbefehle während des Fräsbetriebes automatisch von der von der Steuereinheit gesteuerten Ausgabeeinrichtung in Abhängigkeit vom jeweils ermittelten Abstandswert erhält. Dadurch ist es nicht mehr erforderlich, dass der Maschinenführer der Fräsvorrichtung gleichzeitig den Fräsvorgang, den Beladevorgang und die Relativpositionierung zwischen der Fräsvorrichtung und der Transporteinrichtung überwacht und steuert. Die Abstandsüberwachung und die Ausgabe entsprechender Steuerkommandos zur Abstandsregulation erfolgt vielmehr automatisch, so dass sich der Maschinenführer der Fräsvorrichtung voll auf die Durchführung der Fräsarbeiten konzentrieren kann.

Das erfindungsgemäße Verfahren kann ferner Warnfunktionen mit umfassen. Minimalabstand und/oder Maximalabstand sind dann in der Weise festgelegt, dass ein Sicherheitspuffer vorgesehen ist. Bei Erreichen des Minimalabstandes erfolgt somit nicht sofort eine Kollision zwischen beiden Fahrzeugen, sondern erst, nachdem auch der Minimalabstand um einen bestimmten Betrag unterschritten worden ist. Der Minimalabstand (und auch ergänzend oder alternativ der Maximalabstand) ist somit der Abstandswert, der im Einsatzbetrieb nicht unter-(/über-)schritten werden soll. Sollte der von der Sensoreinrichtung ermittelte Abstandswert den Minimalwert unterschreiten, kann das Ausgeben einer Warnmeldung an den Fahrer der Transporteinrichtung und, je nach Ausführungsform, zusätzlich auch an den Maschinenführer der Fräsvorrichtung vorgesehen sein, um dem Auftreten einer Kollision oder einem unvollständigen Überführen des Fräsgutes in den Transportbehälter vorzubeugen. Die Warnmeldung zeichnet sich gegenüber der Ausgabe eines regulären Steuerkommandos dadurch aus, dass sie erheblich deutlicher wahrnehmbar, beispielsweise lauter, blinkend, etc., ist.

Für den Maschinenführer der Fräsvorrichtung ist es vorteilhaft, die dem Transporteinrichtungsführer übermittelten Signale ebenfalls wahrnehmen zu können, um auf die Handlungen des Transporteinrichtungsführer, zum Beispiel Anfahren oder Anhalten, besser vorbereitet zu sein und entsprechend schnell reagieren zu können. Dafür wird das jeweilige Steuersignal vorzugsweise gleichzeitig durch die Ausgabeeinrichtung und eine Kontrollausgabeeinrichtung ausgegeben. Dabei kann die Ausgabeeinrichtung beispielsweise an der Transporteinrichtung und die Kontrollausgabeeinrichtung an der Fräsvorrichtung oder beide Ausgabeeinrichtungen entweder an der Transporteinrichtung oder insbesondere an der Fräsvorrichtung angebracht sein. Die Steuereinheit ist bei dieser Ausführungsform somit in der Weise ausgebildet, dass das Weiterleiten der Steuersignale gleichzeitig an mehr als eine Ausgabeeinrichtung, insbesondere an zwei Ausgabeeinrichtungen, erfolgt.

Bei einem erfindungsgemäßen Arbeitszug werden die Transporteinrichtung und die Fräsvorrichtung unabhängig voneinander bewegt. Der Zwischenraum zwischen der Transporteinrichtung und der Fräsvorrichtung stellt daher insbesondere im Arbeitsbetrieb einen Risikobereich dar, in dem es schnell zu Unfällen mit in diesem Bereich befindlichen Personen kommen kann. Dieser Bereich ist häufig weder für den Maschinenführer der Fräsvorrichtung noch für den Fahrer des Transportfahrzeugs einsichtig. Darüber hinaus bewegen sich beide Fahrzeuge im Fräsbetrieb relativ zueinander, so dass insbesondere die Breite dieses Zwischenraums nicht statisch sondern variabel ist. Weiterhin ist es möglich, dass die Sensoreinrichtung bei einem im Bereich zwischen Transporteinrichtung und Fräsvorrichtung befindlichen Objekt oder Menschen nicht den Abstand zwischen Transporteinrichtung und Fräsvorrichtung, sondern den Abstand zu dem Objekt beziehungsweise Mensch bestimmen, was zumindest bei der Verwendung sehr einfacher Sensoreinrichtungen auftreten könnte. Dies kann dann fälschlicherweise eine Betätigung der Ausgabeeinrichtung auslösen. Vorzugsweise ist es nun vorgesehen, dass durch die Sensoranordnung und die Steuereinheit neben der reinen Abstandsüberwachungsfunktion gleichzeitig eine Bereichsüberwachungsfunktion erfolgt, die insbesondere den Zwischenraum zwischen Fräsvorrichtung und Transporteinrichtung auf die Anwesenheit einer Person prüft beziehungsweise auf die Abwesenheit von Personen in diesem Bereich während des Arbeitsbetriebs überwacht. Dazu ist zum Beispiel die Sensoreinrichtung so ausgebildet, dass sie Hindernisse zwischen der Fräsvorrichtung und der Transporteinrichtung erkennt und zwischen einem Fahrzeug und einer Person unterscheiden kann. Dies kann zum Beispiel dadurch gelingen, dass die Sensoreinrichtung Signale aussendet, die die Umgebung fächerförmig abtasten. Aus der Abfolge der empfangenen Signale kann auf die Kontur des Objektes zurückgeschlossen werden. So kann beispielsweise ein in den Bereich zwischen Fräsvorrichtung und Transporteinrichtung hineinlaufender Mensch detektiert werden. Eine andere Möglichkeit, den eine Bereichsüberwachung zwischen Transporteinrichtung und Fräsvorrichtung einzurichten, stellen Transponderelemente oder Lichtschranken oder insbesondere auch Funkfelder dar. Auch denkbar ist eine Ausbildung der Sensoreinrichtung und/oder der Steuereinheit in der Weise, dass die Steuerung der Ausgabeeinrichtung davon abhängt, ob die im Fräsbetrieb ermittelten Abstandswerte sich langsam und kontinuierlich ändern oder ob eine sprunghafte Abstandsänderung vorliegt, wie es beispielsweise bei einer in den Zwischenraum eintretenden Person der Fall wäre. Für diesen Fall kann nun vorgesehen sein, dass die Steuereinheit einen Personen- und/oder Hindernisalarm auslöst, der über die zur Ausgabe eines entsprechenden Warnsignals ausgebildeten Ausgabeeinrichtung an den Fahrer der Transporteinrichtung und, je nach Ausführungsform, ergänzend an den Maschinenführer der Fräsvorrichtung ausgegeben wird.

Für den Maschinenführer der Fräsvorrichtung ist es, insbesondere bei einer Vorderladerfräsvorrichtung, problematisch, während des Fräsbetriebes gleichzeitig nach vorne auf den Verlauf der Straße und den Verlauf der Fräskante zu achten. Dadurch kann es vorkommen, dass eine durch den Transporteinrichtungsführer eingeleitete Kurvenfahrt durch den Maschinenführer der Fräsvorrichtung zu spät erkannt wird, da sich dieser schwerpunktmäßig auf die Durchführung der Fräsarbeiten konzentriert. Beim erfindungsgemäßen Verfahren ist somit eine Kurvenerkennungsfunktion vorgesehen, mit deren Hilfe das Einleiten einer Kurvenfahrt durch die der Fräsvorrichtung vorausfahrende Transporteinrichtung detektierbar ist. Eine Kurvenfahrt der vorausfahrenden Transporteinrichtung kann beispielsweise über die Kopplung wenigstens zweier horizontal zueinander beabstandeter Sensorelemente erfolgen. Die Kurvenfahrterkennung kann sich dabei konkret aus einer Differenz des durch die beiden Sensorelemente ermittelten Abstandswertes zwischen der Transporteinrichtung und der Fräsvorrichtung ergeben. Bei einer Kurvenfahrt stehen beide Fahrzeuge in der Horizontalebene schräg zueinander.

Nachfolgend wird die Erfindung anhand von in den Zeichnungen angegebenen Ausführungsbeispielen weiter erläutert Gleiche Bauteile sind nachstehend mit gleichen Bezugszeichen angegeben. Es zeigen schematisch:
- Fig. 1a und 1b: Seitenansicht eines Arbeitszuges aus Transporteinrichtung und Fräsvorrichtung;
- Fig. 2a und 2b: Seitenansicht auf einen Arbeitszug mit einer Sensoreinrichtung;
- Fig. 3a bis 3c: Draufsicht auf einen Arbeitszug aus Figuren 1a, 1b, 2a und 2b;
- Fig. 4: Draufsicht eines Arbeitszuges zur Veranschaulichung der verschiedenen Abstände;
- Fig. 5: Draufsicht eines Arbeitszuges zur Veranschaulichung der Bereichsüberwachung;
- Fig. 6a und 6b: Draufsicht eines Arbeitszuges zur Veranschaulichung einer Kurvenfahrt; und
- Fig. 7: Ablaufdiagramm zur Abstandsüberwachung.

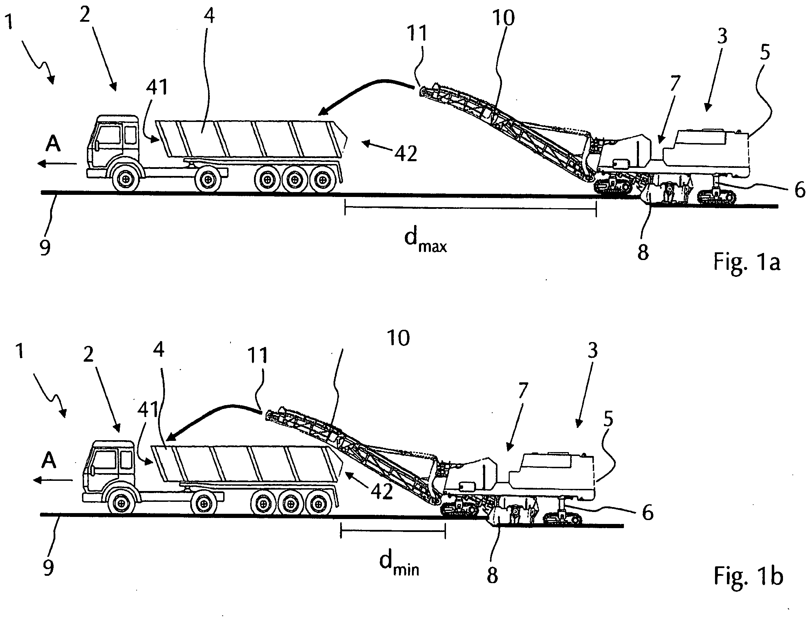

Figuren 1a und 1b zeigen einen Arbeitszug 1, umfassend eine Transporteinrichtung, in dieser Ausführungsform ein Sattelschlepper mit Transportanhänger 2, und eine Fräsvorrichtung, konkret eine selbstfahrende Kaltfräse 3. Während des Fräsbetriebes trägt die Fräsmaschine 3 mit Hilfe des Fräsrotors 8 die abzufräsende Bodenoberfläche 9 ab. Die Fräsmaschine 3 umfasst einen Maschinenrahmen 5, ein Fahrwerk 6 (mit vier einzelnen Hubsäulen mit Raupengondeln) und einen Bedienarbeitsplatz 7. Der Fräsrotor 8 ist in einem Fräswalzenkasten gelagert und wird quer zur Arbeitsrichtung A des Arbeitszuges 1 angetrieben. Das von der Fräsmaschine 3 abgetragene Bodenmaterial wird über eine als Förderband 10 ausgebildete Fördereinrichtung in einen Transportbehälter 4 des Sattelkraftfahrzeuges 2 transportiert. Das Förderband 10 ist im vorliegenden Ausführungsbeispiel am Maschinenrahmen 5 der Fräsmaschine 3 angebracht und schräg nach vorn und vertikal nach oben in Richtung auf das Sattelkraftfahrzeug 2 beziehungsweise in Arbeitsrichtung A gerichtet. Die Fräsmaschine 3 ist demnach eine sogenannte Frontlader-Straßenfräsmaschine und fördert das im Arbeitsbetrieb abgefräste Bodenmaterial (Fräsgut) in Arbeitsrichtung A nach vorn zum vorweg fahrenden Transportfahrzeug. Das Fräsgut wird am oberen Ende 11 des Förderbandes 10 in den Transportbehälter 4 des Sattelkraftfahrzeugs 2 abgeworfen. Demnach wird das Sattelkraftfahrzeug 2 von oben mittels des Förderbandes 10 beladen. Der Transportbehälter 4 weist dabei eine Vorderwand am vorderen Ende 41, eine Rückwand am hinteren Ende 42 und entsprechend Seitenwände sowie einen Boden auf und hat insgesamt eine im Wesentlichen kastenförmige Ausbildung.

Während des Fräsbetriebs fährt die Fräsmaschine 3 in Arbeitsrichtung A über den zu bearbeitenden Boden. Dabei wird das anfallende Fräsgut über das Transportband 10 in den Transportbehälter 4 abgeladen. Das Sattelkraftfahrzeug 2 kann üblicherweise nicht die relativ langsame Geschwindigkeit der Fräsmaschine 3 mitfahren. Es hat sich daher in der Praxis ein wiederholtes Anfahren und Stehenbleiben des Sattelkraftfahrzeuges 2 während des Beladebetriebs etabliert. Dieser Ablauf wird nachstehend am Beispiel der Frontladerfräse 3 weiter erläutert. Die Erfindung ist allerdings auch auf nach hinten oder zur Seite verladende Fräsen anwendbar, wobei hier die Steuerbefehle, insbesondere im Hinblick auf die noch weiter erläuterte Unter- und Überschreitung eines Minimal- und eines Maximalabstandes auf ein Hinterherfahren oder seitliches Nebenherfahren ausgelegt sind. Optimal ist es allerdings, wenn das Transportfahrzeug im Arbeitsbetrieb in Arbeitsrichtung vor der Fräsmaschine 3 fährt.

Zunächst wird von einem maximalen Abstand dₘₐₓ zwischen dem Sattelkraftfahrzeug 2 und der Fräsmaschine 3 ausgegangen. Der Abstand d entspricht dem Abstand in Arbeitsrichtung A zwischen dem Maschinenrahmen 5 der Fräsmaschine 3 und dem hinteren Ende 42 des Transportbehälters 4 bzw. des Sattelkraftfahrzeuges 2 in Horizontalrichtung. Der maximale horizontale Abstand dₘₐₓ ist so bemessen, dass das Fräsgut gerade noch in den Bereich am hinteren Ende 42 des Transportbehälters 4 des vorausfahrenden Transportfahrzeugs, das heißt an der der Fräsmaschine 3 zugewandten Seite, abgeworfen werden kann. Sobald das Sattelkraftfahrzeug 2 mit dem Abstand dₘₐₓ in Arbeitsrichtung A vor der Fräsmaschine 3 steht, kann mit dem Beladevorgang und dem Fräsbetrieb begonnen werden. Dabei bewegt sich die Fräsmaschine 3 mit nahezu konstanter und vergleichsweise langsamer Geschwindigkeit auf das stehende Sattelkraftfahrzeug 2 in Arbeitsrichtung A zu, bis ein minimaler horizontaler Abstand dₘᵢₙ zwischen dem Sattelkraftfahrzeug 2 und der Fräsmaschine 3 (Fig. 1b) erreicht ist. Der minimale Abstand dₘᵢₙ entspricht definitionsgemäß demjenigen horizontalen Abstand, bei dem das Fräsgut noch nicht über den Transportbehälter hinweg abgeworfen wird und noch keine Kollision zwischen den beiden Fahrzeugen auftritt, je nachdem, welcher Abstand größer ist. Im nächsten Schritt fährt das Sattelkraftfahrzeug 2 in Arbeitsrichtung A solange vor und vergrößert den Abstand d zur Fräsmaschine 3 bis der Maximalabstand dₘₐₓ erreicht ist und bleibt wieder stehen. Dieser Ablauf wiederholt sich so lange, bis der Transportbehälter 4 mit Fräsgut bis zu einer bestimmten Füllhöhe beladen ist und das Sattelkraftfahrzeug durch ein anderes Sattelkraftfahrzeug mit leerem Transportbehälter ersetzt wird.

Dieser Ablauf, der den Abstand zwischen dem Sattelkraftfahrzeug 2 und der Fräsmaschine 3 fortwährend zwischen dₘₐₓ und dₘᵢₙ verändert, ermöglicht ein gleichmäßiges Beladen vom hinteren Ende 42 bis zum vorderen Ende 41 des Transportbehälters 4 mit abgefrästem Bodenmaterial durch die Fräsmaschine 3. Weiterhin wird durch das Vergrößern des Abstandes von dₘᵢₙ auf dₘₐₓ zwischen dem Sattelkraftfahrzeug 2 und der Fräsmaschine 3 eine Kollision der beiden Fahrzeuge verhindert.

Bisher musste der Bediener der Fräsmaschine 3 dem Fahrer des Sattelkraftfahrzeuges 2 aktiv Fahrkommandos zum Anfahren, Anhalten und Abfahren übermitteln, zum Beispiel per Hupsignal. Der Maschinenführer der Fräsmaschine 3 hupte beispielsweise bei Erreichen des Minimalabstandes dₘᵢₙ, womit er dem Fahrer des Sattelkraftfahrzeuges 2 signalisierte, dass dieser sich in Arbeitsrichtung A nach vorne bewegen soll. Bei Erreichen des Maximalabstandes dₘₐₓ hupte der Maschinenführer der Fräsmaschine 3 abermals und signalisierte dem Fahrer des Sattelkraftfahrzeuges 2, dass dieser anhalten soll. Nach wiederholtem Anfahren und Anhalten signalisiert der Fräsmaschinenführer schließlich wieder durch Hupen, dass der Transportbehälter 4 des Sattelkraftfahrzeuges 2 mit Fräsgut vollgefüllt und ein Abtransport nötig ist. Der Maschinenführer der Fräsmaschine 3 musste demnach gleichzeitig mehrere Prozesse ausführen. Er musste den Fräsvorgang an sich beobachten und steuern und zugleich Steuerbefehle in Abhängigkeit des Abstandes zwischen den Fahrzeugen an den Fahrer des Sattelkraftfahrzeuges 2 übermitteln. Zur Entlastung des Maschinenführers der Fräsmaschine 3 ist erfindungsgemäß nun eine Sensoreinrichtung 12 vorgesehen, die dem Fräsmaschinenführer das Abschätzen des Abstandes abnimmt und in einer bevorzugten Ausführungsform gleichzeitig Steuerkommandos an den Fahrer der Transporteinrichtung 2 auslöst und übermittelt.

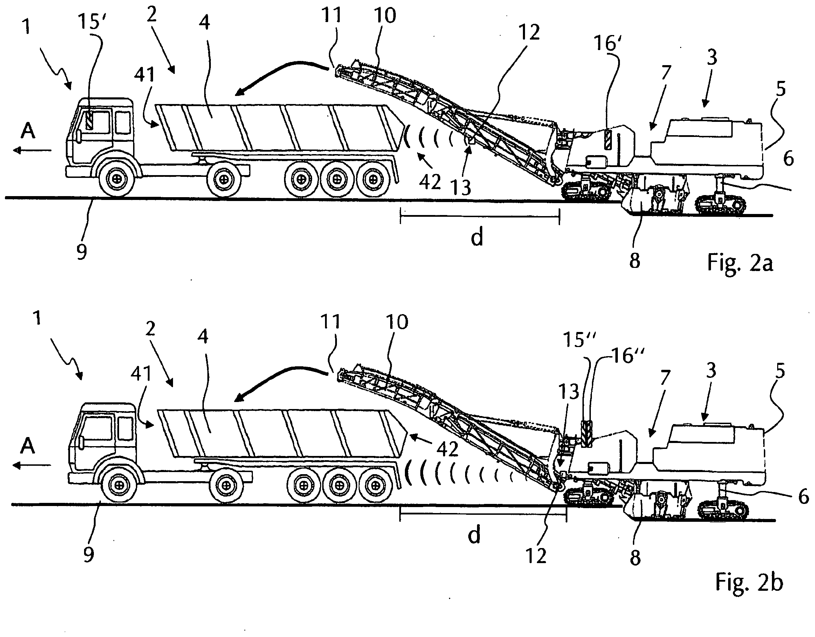

Grundsätzlich muss die Sensoreinrichtung in der Weise ausgebildet sein, dass sie den, idealerweise horizontalen, Abstand zwischen der Fräsvorrichtung 3 und dem Transportfahrzeug 2 ermitteln und überwachen kann. Gemäß den Ausführungsbeispielen in den Figuren 2a und 2b ist die Sensoreinrichtung 12 dazu an der Fräsmaschine 3 in Richtung des Transportfahrzeuges 2 befestigt, konkret an der dem Transportfahrzeug 2 in Arbeitsrichtung a zugewandten Vorderseite der Fräsmaschine 3. Dabei kann die Sensoreinrichtung 12 selbst an einem Teil der Fräsmaschine 3 befestigt werden oder aber an einem weiteren Element befestigt sein, welches dann an die Fräsmaschine 3 angebracht werden kann. Fig. 2a zeigt die Sensoreinrichtung 12 am Förderband 10 der Fräsmaschine 3 mit Blick- beziehungsweise Messrichtung in Richtung des vorausfahrenden Transportfahrzeugs 2. Bei dieser Ausführungsform ermittelt die Sensoreinrichtung 12 den horizontalen Abstand d zwischen dem unteren Ende des Transportbehälters 4 des Sattelkraftfahrzeuges 2 und dem Förderband 10 der Fräsmaschine 3. Fig. 2b zeigt eine weitere mögliche Anordnung der Sensoreinrichtung 12 am unteren Teil des Maschinenrahmens 5 der Fräsmaschine 3. Während die am Förderband 10 angeordnete Sensoreinrichtung 12 aus Fig. 2a zusammen mit dem Förderband 10 verschwenkt werden kann, ist die Sensoreinrichtung 12 gemäß Fig. 2b starr am Maschinenrahmen 5 der Fräsmaschine 3 angeordnet.

Die in Fig. 2b abgebildete Sensoreinrichtung 12 ist bei dieser Ausführungsform eine VierKanal-Ultraschallsensoreinrichtung, das heißt es sind vier Sensorelemente nebeneinander auf gleicher Höhe vorne am Maschinenrahmen angebracht. Zur Abstandsermittelung zwischen der Fräsmaschine 3 und dem Sattelkraftfahrzeug 2 senden diese Sensorelemente kontinuierlich in Horizontalrichtung Ultraschallsignale in Richtung des Sattelkraftfahrzeuges 2. Nach Reflektion am Sattelkraftfahrzeuges 2 empfangen die Sensorelemente die Ultraschallsignale und übermitteln diese an eine in die Sensoreinrichtung 12 integrierte Steuereinheit 13, welche aus der Laufzeit der Ultraschallsignale die Distanz zwischen der Fräsmaschine 3 und der dem Sattelkraftfahrzeug 2 errechnet. In diesem Ausführungsbeispiel ist die Steuereinheit 13 in die Sensoreinrichtung 12 integriert. Die Steuereinheit 13 kann jedoch auch räumlich getrennt von der Sensoreinrichtung 12 entweder an der Fräsmaschine 3 oder an der Transporteinrichtung 2 angebracht sein und beispielsweise drahtlos mit der Sensoreinrichtung 12 kommunizieren.

Die Steuereinheit 13 ist außerdem mit einer Ausgabeeinrichtung verbunden. Diese gibt entweder direkt die berechneten Abstandswerte oder ein Signal aus, beispielsweise einen Steuerbefehl, welchen die Steuereinheit 13 in Abhängigkeit von einem Abstandswert angibt. Fig. 2a zeigt eine Ausgabeeinrichtung in Form einer optischen Anzeige, konkret einer Ampel 15', die in dem Führerhaus der Transporteinrichtung 2 angebracht ist. Die Ampel 15' ist eine portable Einheit, die in jedem Fahrzeug, beispielsweise am Innenspiegel mittels eines Hakens, angebracht werden kann. Bei dieser Ausführungsform ist der Maschinenführer des Sattelkraftfahrzeuges 2 in der Lage, die Ampel 15', welche Steuerbefehle anzeigt, stets im Blick zu haben und das Sattelkraftfahrzeug 2 den Steuerbefehlen entsprechend zu steuern. Eine andere Variante der optischen Anzeigeeinrichtung zeigt Fig. 2b, in der die Ampel 15" an der Fräsmaschine 1 angebracht ist, sodass der Maschinenführer des Sattelkraftfahrzeuges 2 durch seine am Fahrzeug angebrachten Spiegel in die Lage versetzt wird, die Ampel zu beobachten und den angezeigten Signalen entsprechend sein Fahrzeug zu steuern.

Um dem Maschinenführer der Fräsmaschine 1, der die Ampel 15', 15" selbst in der Regel nicht vollständig einsehen kann, die Möglichkeit zu verschaffen, die auf der Ampel 15', 15" angezeigten Signale selbst zu erfassen, ist die Fräsmaschine 3 mit einer optischen Kontrollanzeige, der Kontrollampel 16', 16", ausgestattet. Die Kontrollampel 16' kann dazu, wie in Fig. 2a gezeigt, an der Fräsmaschine 3 in einem für den Fräsmaschinenführer sichtbaren Bereich nahe am Fahrstand oder gar im Fahrstand selbst angebracht sein. Die Kontrollampel 16' ist somit als baulich eigenständige Einheit ausgebildet. Im Unterschied dazu ist in Fig. 2b die Kontrollampel 16" in die Ampel 15" integriert, so dass mit einer Anzeigeeinrichtung sowohl der Fahrer des Transportfahrzeugs 2 als auch der Fahrer der Fräsmaschine 3 über die aktuellen Steuerbefehle informiert werden.

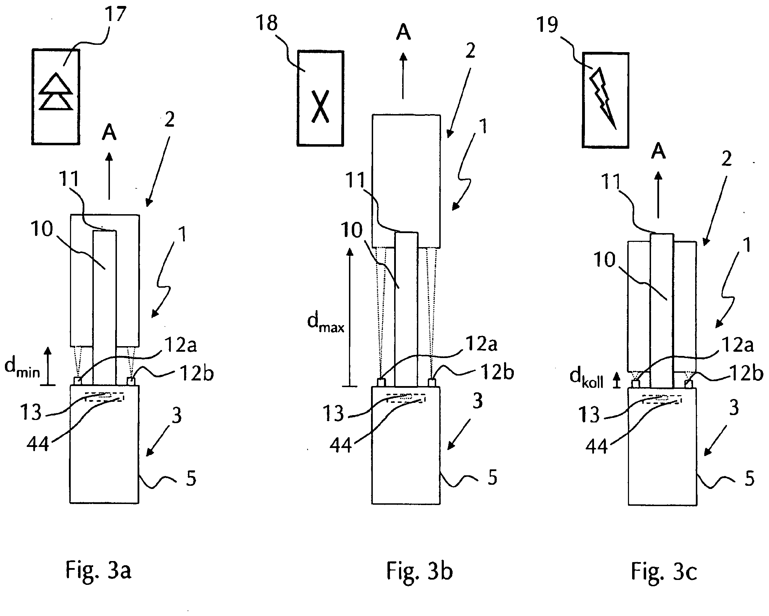

Figuren 3a bis 3c veranschaulichen die Abhängigkeit der durch die Ampel 15' beziehungsweise 15" angezeigten optischen Signale (und die in der Kontrollampel 16', 16" angezeigten Signale) vom jeweils von der Sensoreinrichtung 12 ermittelten Abstand zwischen der Fräsmaschine 3 und dem Transportfahrzeug 2. Die in den Figuren 3a bis 3c als eigenständige Einheit ausgebildete Steuereinheit 13 hat dabei nicht nur die Aufgabe, die von der Sensoreinrichtung 12 empfangenen Signale (Abstandswerte) zu verarbeiten (beziehungsweise konkrete Abstandswerte aus den ermittelten Messwerten zu bestimmen), sondern zusätzlich die optische Anzeigeeinrichtung (Ampel 15', 15" und gegebenenfalls Kontrollampel 16', 16") in Abhängigkeit von diesen Abstandswerten zu regeln. In den Fig. 3a bis 3c ist der Arbeitszug 1 mit dem Sattelkraftfahrzeug 2 und der Fräsmaschine 3 in der Draufsicht zu sehen. Der Abstand zwischen Sattelkraftfahrzeug 2 und Fräsmaschine 3 wird durch zwei Sensorelemente 12a und 12b der Sensoreinrichtung 12 und die in einem Bedienpanel 44 (gestrichelt dargestellt) integrierte Steuereinheit 13 bestimmt und kontinuierlich überwacht. Die beiden Sensorelemente 12a und 12b sind in Vertikalrichtung auf gleicher Höhe und in der Breite der Fräsmaschine 3 zu den beiden Außenseiten der Fräsmaschine 3 hin und zueinander beabstandet angeordnet. Die Steuereinheit 13 veranlasst in Abhängigkeit des ermittelten Abstandes d beziehungsweise beim Erreichen der Grenzabstände dₘᵢₙ, dₘₐₓ, dₖₒₗₗ die optische Anzeigeeinrichtung 15', 15" und, je nach Ausführungsform, die Kontrollampel 16', 16" die im Folgenden näher erläuterten Signale 17, 18, 19 auszugeben.

Liegt der ermittelte Abstand beim minimalen Abstand dₘᵢₙ (oder wird der minimale Abstand dₘᵢₙ unterschritten) wird ein "Vorwärts"-Signal 17 auf der Ampel 15', 15" und gegebenenfalls auf der Kontrollampel 16', 16" angezeigt. Dieses Zeichen signalisiert dem Maschinenführer des Sattelkraftfahrzeuges 2, dass dieser in Arbeitsrichtung A vorfahren soll, um den Abstand d zwischen beiden Fahrzeugen wieder zu vergrößern. Der Fahrer des Transportfahrzeuges 2 fährt entsprechend an, so dass sich der Abstand d zur wesentlich langsamer fahrenden Fräsmaschine 3 vergrößert. Sobald die Sensoreinrichtung 12 das Erreichen des Maximalabstands dₘₐₓ zwischen Sattelkraftfahrzeug 2 und Fräsmaschine 3 ermittelt, veranlasst die Steuereinheit 13 ein Umschalten der Ampel 15', 15" und gegebenenfalls die Kontrollampel 16', 16" zum "Stopp"-Signal 18. Der Fahrer des Sattelkraftfahrzeuges 2 wird somit angewiesen stehen zu bleiben. Bei einer Fortsetzung der Fräsarbeiten nähert sich die Fräsmaschine 3 dem Transportfahrzeug 2 wieder an und der Abstand d zwischen beiden Fahrzeugen verkleinert sich wieder, bis dₘᵢₙ erreicht wird und der Fahrer der Transporteinrichtung 2 erneut zum Anfahren angewiesen wird.

Die vorliegende Ausführungsform umfasst ferner für den Fall, dass sich die beiden Fahrzeuge noch weiter als dₘᵢₙ annähern, eine Kollisionswarnfunktion. Verringert sich ausgehend von dₘᵢₙ die Distanz zwischen dem Sattelkraftfahrzeug 2 und der Fräsmaschine 3 bis auf den Abstand dₖₒₗₗ, wird ein Warnsignal 19 auf der Ampel 15', 15" und gegebenenfalls auf der Kontrollampel 16', 16" angezeigt. Durch das Warnsignal 19 werden der Sattelkraftfahrzeugfahrer und der Fräsmaschinenführer auf eine Gefahrensituation und eine eventuell drohende Kollision mit einem Hindernis oder der beiden Fahrzeuge miteinander aufmerksam gemacht. Das Warnsignal 19 kann beispielsweise erheblich lauter sein oder durch eine Blitzanzeige deutlicher erkennbar sein, um die beiden Maschinenführer sicher auf die drohende Kollision hinzuweisen. Alternativ können beispielsweise auch Zusatzfunktionen an die Unterschreitung des Abstandes dₖₒₗₗ geknüpft sein, die zur Verhinderung einer Kollision dienen. Dies kann beispielsweise eine Autostopp-Funktion sein, die das sofortige Anhalten der Fräsmaschine 2 auslöst.

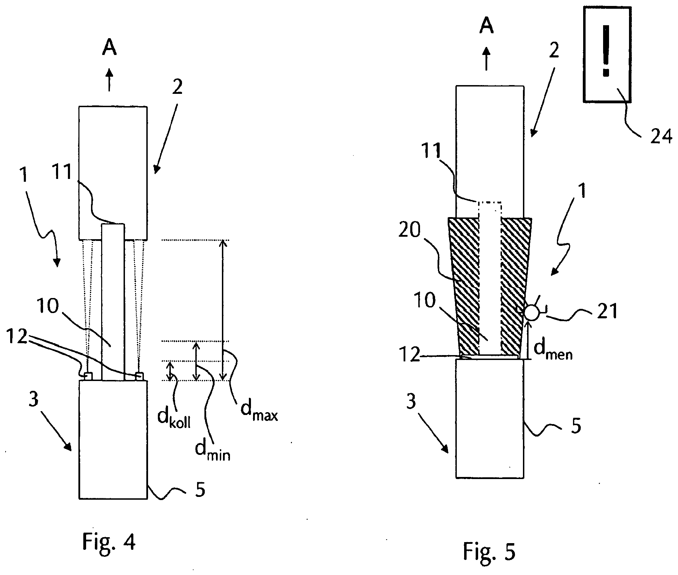

In Fig. 4 werden die verschiedenen Abstände d, die das Sattelfahrzeug 2 in Bezug auf die Fräsmaschine 3 einnimmt und an die Umschaltfunktionen der Ausgabeeinrichtung 15', 15" geknüpft sind, einander gegenübergestellt. Die drei Abstände dₘₐₓ, dₘᵢₙ und dₖₒₗₗ stellen dabei Schaltschwellen dar, bei deren Erreichen (und/oder Überschreiten/Unterschreiten) ein Umschalten des in der Ausgabeeinrichtung 15,15" angegebenen Signals 17, 18, 19 erfolgt. Fig. 4 verdeutlicht dabei insbesondere, dass zwischen den beiden Signalen dₘᵢₙ und dₖₒₗₗ eine Sicherheitsreserve vorhanden ist und nicht beim Erreichen des Minimalabstandes dₘᵢₙ sofort eine Kollision zwischen beiden Fahrzeugen 2 und 3 auftritt.

Während eines Fräseinsatz kann es vorkommen, dass Personen in den Bereich zwischen dem Sattelkraftfahrzeug 2 und der Fräsmaschine 3 hinein laufen, was aus Sicherheitsgründen normalerweise zu vermeiden ist. Die Ausführungsform in Fig. 5 löst dieses Sicherheitsrisiko in der Weise, dass die Sensoreinrichtung 12 zusammen als Bereichsüberwachung ausgebildet ist, die eine Erkennung von Personen im Zwischenraum zwischen der Fräsvorrichtung 3 und dem Transportfahrzeug 2 ermöglicht. Die mit einem Funksensor versehene Sensoreinrichtung 12 gemäß Fig. 5 ermittelt und überwacht somit nicht nur den Abstand zwischen dem Sattelfahrzeug 2 und der Fräsmaschine 3, sondern prüft und überwacht gleichzeitig, ob sich Objekte und insbesondere Personen im Zwischenraum 20 zwischen der Fräsvorrichtung 3 und der Transporteinrichtung 2 befinden. Fig. 5 stellt den Überwachungsbereich 20 zwischen dem Sattelkraftfahrzeug 2 und der Fräsmaschine 3 dar. Die Sensoreinrichtung 12 ist zusammen mit der Steuereinheit 13 (hier nicht dargestellt) in der Weise ausgebildet, dass sie im Überwachungsbereich 20 befindliche und nicht zur Fräseinrichtung 3 oder zum Transportfahrzeug 2 gehörende Objekte erfassen kann. Bewegt sich beispielsweise ein Mensch 21 in den Überwachungsbereich 20 während des Fräsbetriebs hinein, werden die an dem Menschen 21 reflektierten Signale sprunghaft schneller von der Sensoreinrichtung 12 empfangen als die Signale, die vom Sattelkraftfahrzeug 2 reflektiert werden. Mithilfe der Steuereinheit 13 (nicht dargestellt) wird durch die Verarbeitung der empfangenen Signale festgestellt, dass der ermittelte Abstand dₘₑₙ nicht dem Abstand zwischen Sattelkraftfahrzeug 2 und Fräsmaschine 3 ist, sondern dem Menschen 21 zugeordnet werden muss. Die Zuordnung der durch die Sensoreinrichtung 12 empfangenen Signale kann auf unterschiedliche aus dem Stand der Technik bekannte Arten erfolgen. So können beispielsweise Rückschlüsse auf die Kontur oder die Größe des Objektes, von welchem die Signale reflektiert wurden, gezogen werden. Die Bereichsüberwachung kann aber beispielsweise auch durch Lichtschranken erfolgen, wobei dafür zusätzlich zu der Sensoreinrichtung wenigstens eine Lichtschranke an der Fräsmaschine 3 angebracht ist. Grundsätzlich kann zum Erhalt der Bereichsüberwachungsfunktion somit auf sämtliche Systeme zurückgegriffen werden, die zur Erkennung von Personen im überwachten Bereich ausgebildet sind. Bei Detektion eines Objektes im Überwachungsbereich 20 löst die Steuereinheit 13 die Anzeige des Warnsignals 24 auf der Ampel 15', 15" und gegebenenfalls auf der Kontrollampel 16', 16" aus, das auf die spezielle Gefahrensituation hinweist.

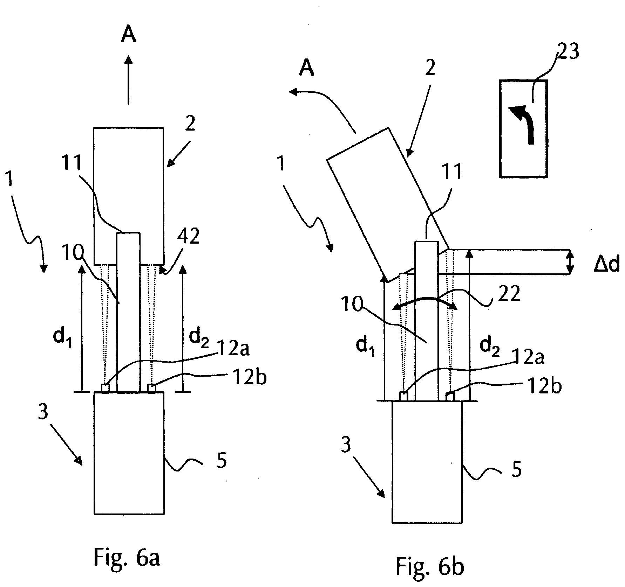

Figuren 6a und 6b stellen den Ablauf einer Kurvenfahrt des Arbeitszuges 1 dar und veranschaulichen die Ausbildung der Gesamtheit aus Sensoranordnung 12, Steuereinheit 13 und Ausgabeeinrichtung 15 zur selbständigen Erkennung der Kurvenfahrt. Dabei sind aus Übersichtlichkeitsgründen die Steuereinheit 13 und die Ausgabeeinrichtung 15 nicht angegeben. Zu deren Lage und Anordnung wird Bezug auf die vorhergehenden Figuren genommen. Fig. 6a zeigt den Zustand des Arbeitszuges 1 vor einer Kurvenfahrt beziehungsweise bei Geradeausfahrt. Das Sattelkraftfahrzeug 2 fährt in Fig. 6a somit in Arbeitsrichtung A der Fräsmaschine 3 gerade voraus. Dabei sind die Abstände d₁ und d₂, den die beiden auf der rechten und auf der linken Frontseite der Fräsvorrichtung 3 angeordneten Sensorelemente 12a und 12b zwischen dem hinteren Ende 42 des Transportbehälters 4 des Sattelkraftfahrzeugs 2 und dem vorderen Teil des Maschinenrahmens 5 der Fräsmaschine 3 gleich groß und bleiben auch bei unterschiedlichen Abständen gleich groß. Wird nun eine Kurvenfahrt durch den Maschinenführer des Sattelkraftfahrzeuges 2 eingeleitet, wie in Fig. 6b dargestellt, muss der Maschinenführer der Fräsmaschine 3 rechtzeitig reagieren, um auch bei Kurvenfahrt den vollständigen Fräsguttransport in den Transportbehälter 4 zu gewährleisten. Dies kann beispielsweise durch ein seitliches Verschwenken der Fördereinrichtung 10 ermöglicht werden, wie es in Fig. 6b durch den Pfeil 22 angedeutet ist. Um den Maschinenführer der Fräsmaschine 3 frühzeitig auf eine bevorstehende Kurvenfahrt in Arbeitsrichtung A vorzubereiten, sendet die optische Anzeigeeinrichtung über die Kontrollampel 16', 16" ein Signal 23 aus, welches die bevorstehende Kurvenfahrt anzeigt. Es versteht sich von selbst, dass dieses Signal auch über die Ausgabeeinrichtung 15',15" für den Fahrer der Transporteinrichtung 2 angegeben werden kann. Die Erkennung der Kurvenfahrt erfolgt dabei konkret über einen Abstandsvergleich zwischen d₁ und d₂. Befindet sich wenigstens eines der beiden Fahrzeuge 2 und 3 des Arbeitszuges 1 in einer Kurvenfahrt, nehmen beide Fahrzeuge in Bezug auf die Arbeitsrichtung A eine Schrägstellung in der Horizontalebene zueinander ein. Die von den Sensorelementen 12a und 12b und der Steuereinheit ermittelten Abstandswerte d₁ und d₂ unterscheiden sich in diesem Fall um den Betrag Δd. Auch für Δd ist ein Grenzwert festgelegt, bei dessen Überschreiten die Steuereinheit die ergänzende Anzeige des Signals 23 veranlasst. So wird der Fahrer der Fräsmaschine 3 frühzeitig auf die Kurvenfahrt vorbereitet und kann dementsprechend rechtzeitig reagieren.

Des Weiteren berechnet die Steuereinheit 13 aufgrund der sich unterscheidenden Signale der Sensorelemente 12a und 12b beziehungsweise Abstände d₁ und d₂ und dem daraus resultierenden Unterschied Δd einen wahren bereinigten Abstandswert, in dessen Abhängigkeit die in Fig. 3a bis 3c abgebildeten Signale 17, 18, 19 ausgelöst werden. Dadurch, dass die Steuereinheit 13 in die Verarbeitung der von den Sensorelementen 12a und 12b empfangenen Signale den Unterschieds Δd der Abstände d₁ und d₂ mit einbezieht, wird sichergestellt, dass ein Signal, zum Beispiel das Signal 17 für das Erreichen des minimalen Abstandes dₘᵢₙ, nicht aufgrund der Kurvenfahrt ausgelöst wird. Bei der Kurvenfahrt rückt zwangsläufig eine Seite des hinteren Endes 42 des Transportbehälters 4 dem vordersten Teil des Maschinenrahmens 5 der Fräsmaschine 3 näher.

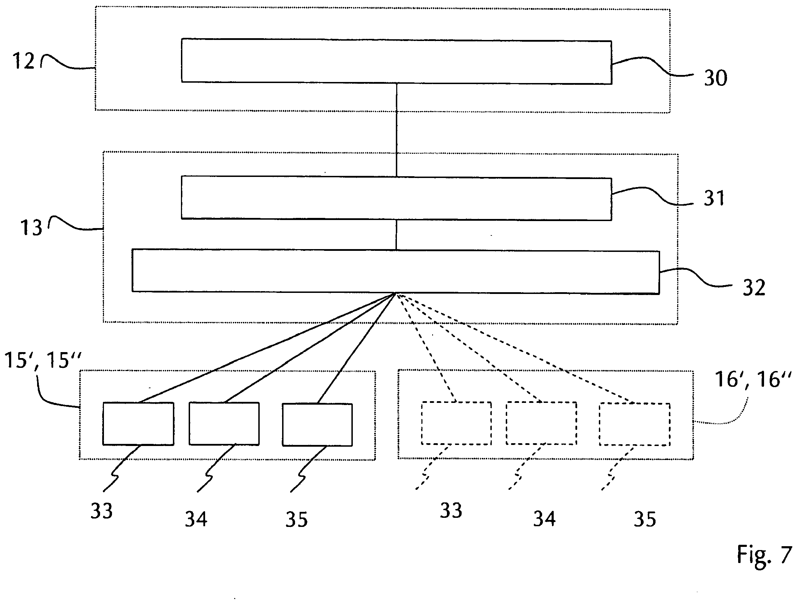

Fig. 7 schließlich veranschaulicht die wesentlichen Schritte zur Durchführung des Verfahrens zur Bestimmung und Überwachung des Abstandes zwischen dem Sattelkraftfahrzeuges 2 und der Fräsmaschine 3 und der Steuerung der Ausgabeeinrichtung 15',15" in Abhängigkeit von den ermittelten Abstandswerten. Im Schritt 30 erfolgt zunächst das Ermitteln des Abstandes zwischen des Sattelkraftfahrzeuges 2 und der Fräsmaschine 3 mit Hilfe der Sensoreinrichtung 12. Dieses Erfassen erfolgt kontinuierlich, so dass immer nahezu der Ist-Abstand überwacht wird. Die von der Sensoreinrichtung 12 erfassten Abstände werden jeweils in der Steuereinheit 13 verarbeitet, welches Schritt 31 darstellt. Verarbeiten bedeutet dabei, dass die Steuereinheit 13 aus den ermittelten Messwerten konkrete Abstandswerte ermittelt und/oder prüft, ob die ermittelten Abstandswerte und/oder Messsignale bestimmte festgelegte Grenzwerte dₘₐₓ, dₘᵢₙ und dₖₒₗₗ über- oder unterschreiten. In einem weiteren Schritt 32 steuert die Steuereinheit 13 in Abhängigkeit der ermittelten Abstände beziehungsweise in Abhängigkeit vom Über- oder Unterschreiten bestimmter Schwellwerte die Ampel 15', 15" und gegebenenfalls die Kontrollampel 16', 16" (gestrichelt dargestellt) an. Wird ein minimaler Abstand dₘᵢₙ zwischen dem Sattelkraftfahrzeuges 2 und der Fräsmaschine 3 erreicht, zeigt die Ampel 15', 15" und gegebenenfalls die Kontrollampel 16', 16" ein "Vorwärts"-Signal an (Schritt 33). Bei einem Erreichen eines maximalen Abstandes wird durch die Ampel 15', 15" und gegebenenfalls die Kontrollampel 16', 16" ein "Stopp"-Signal ausgegeben (Schritt 34). Sollte eine Kollision der beiden Fahrzeuge drohen, wird die Ampel 15', 15" und gegebenenfalls die Kontrollampel 16', 16" durch die Steuereinheit 13 dazu veranlasst, ein Warnsignal auszugeben (Schritt 35).

## Patentansprüche

1. Arbeitszug (1) mit
- einer Fräsvorrichtung (3) mit einem Maschinenrahmen (5), einem Fräsrotor (8) zum Abfräsen der Bodenoberfläche (9) und einer Fördereinrichtung (10) zum Abtransport des Fräsguts; und
- einer von der Fräsvorrichtung (3) unabhängig bewegbaren Transporteinrichtung (2) mit einem Transportbehälter (4) , in den das Fräsgut von der Fräsvorrichtung (3) mithilfe der Fördereinrichtung (10) transportierbar ist;
**gekennzeichnet durch**
- eine Sensoreinrichtung (12), die zur Bestimmung und Überwachung des Abstandes (d) zwischen Fräsvorrichtung (3) und Transporteinrichtung (2) ausgebildet ist;
- eine Steuereinheit (13), die die von der Sensoreinrichtung (12) ermittelten Abstände (d) verarbeitet; und
- eine Ausgabeeinrichtung (15', 15"), die in Abhängigkeit der ermittelten Abstände (d) von der Steuereinheit (13) gesteuert wird
wobei die Sensoreinrichtung (12) wenigstens zwei auf gleicher Höhe nebeneinander am Maschinenrahmen (5) der Fräsvorrichtung (3) angeordnete Sensorelemente (12a, 12b) umfasst und die Steuereinheit (13) bei Überschreiten eines Grenzwertes des Unterschieds zwischen den von den Sensorelementen (12a, 12b) und der Steuereinheit (13) ermittelten Abstandswerten (d₁, d₂) die Anzeige einer bevorstehenden Kurvenfahrt veranlasst.

2. Arbeitszug gemäß Anspruch 1,
**dadurch gekennzeichnet,**
**dass** die Sensoreinrichtung (12) in einem der Transporteinrichtung (2) zugewandten Bereich an der Fräsvorrichtung (3) angebracht ist.

3. Arbeitszug gemäß einem der vorgehenden Ansprüche,
**dadurch gekennzeichnet,**
**dass** die Sensoreinrichtung (12) mindestens ein Ultraschall-, Radar- oder Lasersensorelement aufweist.

4. Arbeitszug gemäß einem der vorgehenden Ansprüche,
**dadurch gekennzeichnet,**
**dass** eine Überwachungseinrichtung vorhanden ist, die zur Überwachung eines Bereichs (20) zwischen der Fräsvorrichtung (3) und der Transporteinrichtung (2) ausgebildet ist.

5. Arbeitszug gemäß einem der vorgehenden Ansprüche,
**dadurch gekennzeichnet,**
**dass** die Ausgabeeinrichtung (15', 15") an oder in der Transporteinrichtung (2) angebracht ist.

6. Arbeitszug gemäß einem der vorgehenden Ansprüche,
**dadurch gekennzeichnet,**
**dass** die Ausgabeeinrichtung (15', 15") ein Mobilteil ist.

7. Arbeitszug gemäß einem der vorgehenden Ansprüche,
**dadurch gekennzeichnet,**
**dass** die Ausgabeeinrichtung (15', 15") ein optisches Anzeigemittel umfasst.

8. Arbeitszug gemäß einem der vorgehenden Ansprüche,
**dadurch gekennzeichnet,**
**dass** die Ausgabeeinrichtung (15', 15") zur drahtlosen Kommunikation mit der Steuereinheit (13) ausgebildet ist.

9. Arbeitszug gemäß einem der vorgehenden Ansprüche,
**dadurch gekennzeichnet,**
**dass** eine Kontrollausgabeeinrichtung (16) vorhanden ist, die von der Steuereinheit (13) gleichzeitig mit der Ausgabeeinrichtung (15', 15") gesteuert wird.

10. Fräsvorrichtung (3),
**dadurch gekennzeichnet,**
**dass** sie eine Sensoreinrichtung (12), eine Steuereinheit (13) und eine Ausgabeeinrichtung (15', 15"), gemäß den Ansprüchen 1 bis 9, zur Bestimmung und Überwachung des Abstandes (d) zu einer Transporteinrichtung (2) aufweist.

11. Verfahren zum Bestimmen und Überwachen des Abstandes (d) zwischen einer Fräsvorrichtung (3) und einer Transporteinrichtung (2), die Teil eines Arbeitszuges (1), insbesondere eines Arbeitszuges (1) gemäß einem der Ansprüche 1 bis 9, sind, umfassend die Schritte:
- Ermitteln des Abstandes (d) zwischen Fräsvorrichtung (3) und Transporteinrichtung (2) mithilfe einer Sensoreinrichtung (12);
- Weiterleiten der ermittelten Abstände (d) an eine Steuereinheit (13); und
- Steuern einer Ausgabeeinrichtung (15', 15") in Abhängigkeit der ermittelten Abstände (d) durch die Steuereinheit (13),
wobei ein Überprüfen auf eine Kurvenfahrt der vorausfahrenden Transporteinrichtung (2) mithilfe der Sensoreinrichtung (12) stattfindet.

12. Verfahren gemäß Anspruch 11,
**dadurch gekennzeichnet,**
**dass** bei Erreichen eines minimalen Abstandes (dₘᵢₙ) zwischen der Fräsvorrichtung (3) und der vorausfahrenden Transporteinrichtung (2) die Ausgabeeinrichtung (15', 15") ein "Vorwärts"-Signal (17) und bei Erreichen eines maximalen Abstandes (dₘₐₓ) zwischen der Fräsvorrichtung (3) und der vorausfahrenden Transporteinrichtung (2) ein "Stopp"-Signal (18) ausgibt.

13. Verfahren gemäß einem der Ansprüche 11 oder 12,
**dadurch gekennzeichnet,**
**dass** bei Unterschreiten eines Grenzabstandes (dₖₒₗₗ) zwischen der Fräsvorrichtung (3) und der vorausfahrenden Transporteinrichtung (2) die Ausgabeeinrichtung (15', 15") ein Warnsignal (19) ausgibt.

14. Verfahren gemäß einem der vorhergehenden Ansprüche,
**dadurch gekennzeichnet,**
**dass** die Ausgabe eines Signals (17, 18, 19) gleichzeitig durch die Ausgabeeinrichtung (15', 15") und eine Kontrollausgabeeinrichtung (16) erfolgt.

15. Verfahren gemäß einem der vorhergehenden Ansprüche,
**dadurch gekennzeichnet,**
**dass** das Überwachen eines Bereichs (20) zwischen der Fräsvorrichtung (3) und der Transporteinrichtung (2) zusätzlich zum Überwachen des Abstandes (d) erfolgt, um Hindernisse zwischen der Fräsvorrichtung (3) und der Transporteinrichtung (2) zu erkennen.

## Claims

1. Work train (1) comprising
- a milling device (3) with an engine frame (5), a milling rotor (8) for milling off of the ground surface (9) and a conveyor device (10) for removal of the milled material; and
- a transport device (2) moving independently of the milling device (3) with a transport container (4) into which the milled material from the milling device (3) can be transported by means of the conveyor device (10);
**characterized in that**
- a sensor device (12) that is designed for the determination and monitoring of the distance (d) between milling device (3) and transport device (2);
- a control unit (13) that processes the distances (d) measured by the sensor device (12); and
- an output device (15', 15") that is controlled by the control unit (13) depending on the measured distances (d),
whereby the sensor device (12) consists of at least two sensor elements (12a, 12b) placed next to each other at the same height on the engine frame (5) of the milling device (3) and the control unit (13) triggers the display of an upcoming cornering move when a boundary value of the difference between the distance values (d1, d2) determined by the sensor elements (12a, 12b) and the control unit (13) is exceeded.

2. Work train according to Claim 1,
**characterized in that**
the sensor device (12) is attached to the milling device (3) in an area directed toward the transport device (2).

3. Work train according to any one of the preceding claims,
**characterized in that**
the sensor device (12) has at least one ultrasound, radar or laser sensor element.

4. Work train according to any one of the preceding claims,
**characterized in that**
it comprises a monitoring device that is designed to monitor an area (20) between the milling device (3) and the transport device (2).

5. Work train according to any one of the preceding claims,
**characterized in that**
the output device (15', 15") is arranged on or in the transport device (2).

6. Work train according to any one of the preceding claims,
**characterized in that**
the output device (15', 15") is a mobile part.

7. Work train according to any one of the preceding claims,
**characterized in that**
the output device (15', 15") includes an optical display.

8. Work train according to any one of the preceding claims,
**characterized in that**
the output device (15', 15") is designed for wireless communication with the control unit (13).

9. Work train according to any one of the preceding claims,
**characterized in that**
it comprises a control output device (16) that is controlled by the control unit (13) simultaneously with the output device (15', 15").

10. Milling device (3),
**characterized in that**
it has a sensor device (12), a control unit (13) and an output device (15', 15") according to the claims 1 through 9, for determination and monitoring of the distance (d) to a transport device (2).

11. Method for determination and monitoring of the distance (d) between a milling device (3) and a transport device (2) that are part of a work train (1), particularly of a work train (1) according to any one of the claims 1 to 9, comprising the steps:
- determination of the distance (d) between milling device (3) and transport device (2) using a sensor device (12);
- transmission of the measured distance (d) to a control unit (13); and
- control of an output device (15', 15") depending on the measured distances (d) by the control unit (13),
whereby a monitoring for a cornering move by the preceding transport device (2) occurs with the help of the sensor device (12).

12. Method according to Claim 11,
**characterized in that**
upon reaching a minimum distance (dₘᵢₙ) between the milling device (3) and the preceding transport device (2), the output device (15', 15") displays a "Forward" signal (17) and, upon reaching a maximum distance (dₘₐₓ) between the milling device (3) and the preceding transport device (2), displays a "Stop" signal (18).

13. Method according to any one of the claims 11 or 12,
**characterized in that**
upon falling below a limit distance (d_{coll}) between the milling device (3) and the preceding transport device (2), the output device (15', 15") emits a warning signal (19).

14. Method according to any one of the preceding claims,
**characterized in that**
the display of a signal (17, 18, 19) occurs simultaneously through the output device (15', 15") and a control output device (16).

15. Method according to any one of the preceding claims,
**characterized in that**
the monitoring of an area (20) between the milling device (3) and the transport device (2) occurs in addition to the monitoring of the distance (d) in order to recognize obstacles between the milling device (3) and the transport device (2).

## Revendications

1. Train de travaux (1) comprenant :
- un dispositif de fraisage (3) avec un châssis (5) de moteur, un rotor de fraisage (8) pour fraiser la surface (9) du sol, et un dispositif transporteur (10) pour évacuer le matériau fraisé ; et
- un moyen de transport (2) se déplaçant indépendamment du dispositif de fraisage (3) avec une benne de transport (4) dans laquelle le matériau fraisé par le dispositif de fraisage (3) peut être amené au moyen du dispositif transporteur (10) ;
**caractérisé par**
- un dispositif de capteur (12) qui est conçu pour la détermination et la surveillance de la distance (d) entre dispositif de fraisage (3) et moyen de transport (2) ;
- une unité de commande (13) qui traite les distances (d) mesurées par le dispositif de capteur (12) ;
- un dispositif de sortie (15', 15") qui est commandé par l'unité de commande (13) en fonction des distances mesurées (d),
ledit dispositif de capteur (12) étant constitué d'au moins deux éléments (12a, 12b) de capteur placés à côté l'un de l'autre, à la même hauteur, sur le châssis (5) de moteur du dispositif de fraisage (3), et l'unité de commande (13) déclenchant l'affichage d'un mouvement de virage à venir lorsqu'une valeur limite de la différence entre les valeurs (d1, d2) des distances déterminées par les éléments (12a, 12b) de capteur et l'unité de commande (13) est dépassée.

2. Train de travaux selon la revendication 1,
**caractérisé en ce que**
le dispositif de capteur (12) est fixé au dispositif de fraisage (3) dans une zone orientée vers le moyen de transport (2).

3. Train de travaux selon l'une quelconque des revendications précédentes,
**caractérisé en ce que**
le dispositif de capteur (12) possède au moins un élément de capteur à ultrasons, radar ou à laser.

4. Train de travaux selon l'une quelconque des revendications précédentes,
**caractérisé en ce qu'**
il comprend un dispositif de surveillance qui est conçu pour surveiller une zone (20) située entre le dispositif de fraisage (3) et le moyen de transport (2).

5. Train de travaux selon l'une quelconque des revendications précédentes,
**caractérisé en ce que**
le dispositif de sortie (15', 15") est disposé sur ou dans le moyen de transport (2).

6. Train de travaux selon l'une quelconque des revendications précédentes,
**caractérisé en ce que**
le dispositif de sortie (15', 15") est une partie mobile.

7. Train de travaux selon l'une quelconque des revendications précédentes,
**caractérisé en ce que**
le dispositif de sortie (15', 15") comprend un affichage optique.

8. Train de travaux selon l'une quelconque des revendications précédentes,
**caractérisé en ce que**
le dispositif de sortie (15', 15") est conçu pour une communication sans fil avec l'unité de commande (13).

9. Train de travaux selon l'une quelconque des revendications précédentes,
**caractérisé en ce qu'**
il comprend un dispositif (16) de sortie de commande qui est commandé par l'unité de commande (13) de manière simultanée avec le dispositif de sortie (15', 15").

10. Dispositif de fraisage (3),
**caractérisé en ce qu'**
il comprend un dispositif de capteur (12), une unité de commande (13) et un dispositif de sortie (15', 15") selon les revendications 1 à 9, pour la détermination et la surveillance de la distance (d) par rapport à un moyen de transport (2).

11. Procédé de détermination et de surveillance de la distance (d) entre un dispositif de fraisage (3) et un moyen de transport (2) qui font partie d'un train de travaux (1), en particulier un train de travaux (1) selon l'une quelconque des revendications 1 à 9, comprenant les étapes de :
- détermination de la distance (d) entre dispositif de fraisage (3) et moyen de transport (2) en utilisant un dispositif de capteur (12) ;
- transmission de la distance mesurée (d) à une unité de commande (13) ; et
- commande d'un dispositif de sortie (15', 15") en fonction des distances (d) mesurées par l'unité de commande (13),
une surveillance d'un mouvement de virage par le moyen de transport (2) qui précède se produisant à l'aide du dispositif de capteur (12).

12. Procédé selon la revendication 11,
**caractérisé en ce que**,
lorsqu'une distance minimale (dₘᵢₙ) entre le dispositif de fraisage (3) et le moyen de transport (2) qui le précède est atteinte, le dispositif de sortie (15', 15") affiche un signal "Marche avant" (17) et, lorsqu'une distance maximale (dₘₐₓ) entre le dispositif de fraisage (3) et le moyen de transport (2) qui le précède est atteinte, il affiche un signal "Arrêt" (18).

13. Procédé selon l'une quelconque des revendications 11 ou 12,
**caractérisé en ce que**,
lorsqu'on tombe en-dessous d'une distance limite (d_{coll}) entre le dispositif de fraisage (3) et le moyen de transport (2) qui le précède, le dispositif de sortie (15', 15") émet un signal d'alarme (19).

14. Procédé selon l'une quelconque des revendications précédentes,
**caractérisé en ce que**
l'affichage d'un signal (17, 18, 19) est obtenu simultanément au moyen du dispositif de sortie (15', 15") et d'un dispositif (16) de sortie de commande.

15. Procédé selon l'une quelconque des revendications précédentes,
**caractérisé en ce que**
la surveillance d'une zone (20) entre le dispositif de fraisage (3) et le moyen de transport (2) est obtenue en plus de la surveillance de la distance (d) de manière à reconnaître des obstacles situés entre le dispositif de fraisage (3) et le dispositif de transport (2).
